(19) Europäisches Patentamt / European Patent Office / Office européen des brevets

(11) **EP 4 404 357 B1**

(12) **EUROPEAN PATENT SPECIFICATION**

(45) Date of publication and mention
of the grant of the patent:
**15.04.2026  Bulletin 2026/16**

(21) Application number: **22947724.5**

(22) Date of filing: **30.11.2022**

(51) International Patent Classification (IPC):
$H01M\ 10/42^{(2006.01)}$    $H01M\ 50/147^{(2021.01)}$
$H01M\ 50/209^{(2021.01)}$    $H01M\ 50/244^{(2021.01)}$
$H01M\ 50/30^{(2021.01)}$    $H01M\ 50/342^{(2021.01)}$
$H01M\ 50/35^{(2021.01)}$    $H01M\ 50/358^{(2021.01)}$
$H01M\ 50/249^{(2021.01)}$    $H01M\ 50/367^{(2021.01)}$

(52) Cooperative Patent Classification (CPC):
H01M 50/3425; H01M 10/42; H01M 50/147;
H01M 50/209; H01M 50/244; H01M 50/249;
H01M 50/30; H01M 50/342; H01M 50/35;
H01M 50/358; H01M 50/367; H01M 50/204;
H01M 2200/20; H01M 2220/20; Y02E 60/10

(86) International application number:
**PCT/CN2022/135702**

(87) International publication number:
**WO 2023/245989 (28.12.2023 Gazette 2023/52)**

(54) **BATTERY AND ELECTRICAL DEVICE**

BATTERIE UND ELEKTRONISCHE VORRICHTUNG

BATTERIE ET DISPOSITIF ÉLECTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.06.2022  PCT/CN2022/100760**

(43) Date of publication of application:
**24.07.2024  Bulletin 2024/30**

(73) Proprietor: **Contemporary Amperex Technology
(Hong Kong) Limited
Central, Central And Western District (HK)**

(72) Inventors:
• **KE, Jianhuang
Ningde City, Fujian 352100 (CN)**

• **CHEN, Xiaobo
Ningde City, Fujian 352100 (CN)**
• **LI, Yao
Ningde City, Fujian 352100 (CN)**

(74) Representative: **Gong, Jinping
CocreateIP
Neumarkter Straße 21
81673 München (DE)**

(56) References cited:
EP-A1- 3 890 057    WO-A1-2022/006891
CN-A- 111 106 277    CN-A- 111 106 277
CN-A- 112 103 444    CN-B- 111 106 278
CN-U- 213 026 307    CN-U- 213 026 307
JP-A- 2011 258 426

## Description

### Cross-Reference to Related Applications

The present application claims the priority of Chinese Patent Application PCT/CN2022/100760 filed on June 23, 2022, entitled "BATTERY AND ELECTRICAL DEVICE".

### Technical Field

The present application relates to the technical field of batteries, and in particular, to a battery and an electrical device as specified in the appended claim set.

### Background

With the continuous advancement of the battery technology, various new energy industries using batteries as energy storage devices have developed rapidly. In the development of the battery technology, in addition to improvement of the performance of batteries, the safety problem is also a non-negligible issue. If the safety of a battery cannot be guaranteed, the battery cannot be used. Therefore, how to enhance the safety of the battery is a technical problem urgently to be solved in the battery technology.
CN 111 106 278 describes a battery pack including a box body and an exhaust channel arranged at the bottom of the box body.
CN 111 106 277 illustrates a battery pack including a box body and a plurality of single cells stacked on the bottom of the box.
CN 112 103 444 describes a box, battery, electrical equipment, and a method for manufacturing the battery.

### Summary of the Invention

Embodiments of the present application provide a battery and an electrical device, which can improve the safety performance of the battery.
In a first aspect according to the invention, a battery is provided, comprising: a box comprising an electrical cavity; a battery cell accommodated in the electrical cavity, a first wall of the battery cell being provided with a pressure relief mechanism; a first pathway and a second pathway, the first pathway and the second pathway being configured to be capable of communicating with an interior of the battery cell via the pressure relief mechanism when the pressure relief mechanism is actuated, wherein the first pathway is used to discharge emissions discharged from the pressure relief mechanism into the electrical cavity, and the second pathway is used to discharge the emissions discharged from the pressure relief mechanism out of the electrical cavity; and the battery further comprises: a first balance valve for discharging emissions passing through the first pathway out of the box; and a second balance valve for discharging emissions passing through the second pathway out of the box.
With the above implementations, when thermal runaway or other abnormal conditions occur in the battery cell, high-temperature and high-pressure emissions generated inside the battery cell are discharged towards the direction in which the pressure relief mechanism is provided in the battery cell, and the power and destructive force of such emissions are usually so great that if only one pathway is provided, it is likely to break through one or more structures on or around that pathway, resulting in a further safety problem. Therefore, the box of the battery of embodiments of the present application comprises an electrical cavity, and this battery further comprises a first pathway and a second pathway, wherein the electrical cavity is used to accommodate a battery cell, a first wall of the battery cell being provided with a pressure relief mechanism, the first pathway is used to discharge emissions discharged from the pressure relief mechanism into the electrical cavity, and the second pathway is used to discharge emissions discharged from the pressure relief mechanism out of the electrical cavity, which means that emissions discharged through the pressure relief mechanism can be divided into two pathways for discharging simultaneously, and thus the discharging rate can be increased. The first balance valve and the second balance valve can discharge the emissions passing through the first pathway and the second pathway out of the box to avoid thermal diffusion arising from the accumulation of the emissions in the box, thereby improving the safety of the battery.
In some possible implementations of the first aspect, the electrical cavity comprises a second wall, the first wall facing the second wall.
With the above implementations, the pressure relief mechanism of the battery cell is oriented towards the wall of the electrical cavity rather than towards other battery cells, which can facilitate the provision of an avoidance structure on the wall of the electrical cavity for providing an avoidance space for the deformation of the pressure relief mechanism, thereby making it possible to improve the space utilization rate of the battery, and also to reduce the risk of the battery cell that experiences thermal runaway causing thermal runaway in other battery cells, thus improving the safety of the battery.

In some possible implementations of the first aspect, the first balance valve is disposed on a wall of the electrical cavity other than the second wall.

With the above implementations, when this pressure relief mechanism is actuated, this first balance valve will not fail due to the impact of the emissions, so the reliability of the first balance valve can be ensured, and at the same time, the position of the first balance valve can be reasonably arranged so that the first pathway can discharge the emissions out of the electrical cavity more efficiently.

In some possible implementations of the first aspect, the second wall is provided with a pressure relief region corresponding to the pressure relief mechanism, the pressure relief region being used to form at least part of the second pathway.

With the above implementations, the pressure relief region can provide a deformation space for the pressure relief mechanism when it is actuated, so as to avoid untimely actuation of the pressure relief mechanism caused by the second wall blocking the pressure relief mechanism, and then the emissions can be quickly discharged by the pressure relief mechanism, and the emissions can be discharged out of the electrical cavity through the pressure relief region; therefore, by providing the pressure relief region, the influence of the emissions on components inside the electrical cavity can be reduced.

In some possible implementations of the first aspect, the box comprises: a collection cavity for collecting emissions discharged through the second pathway when the pressure relief mechanism is actuated, the second balance valve being provided on a wall of the collection cavity.

With the above implementations, the collection cavity can collect and/or process the emissions in a centralized manner, for example, the collection cavity can cool down the emissions entering the collection cavity to avoid thermal diffusion between battery cells caused by the emissions; and then the emissions can be discharged out to the outside of the box of the battery through the second balance valve provided in the collection cavity, which can avoid accumulation of a large amount of the emissions in the collection cavity.

In some possible implementations of the first aspect, the second wall is used to form at least part of this collection cavity.

With the above implementations, by forming at least part of the collection cavity using the second wall, the structure of the box can be simplified, and since the second wall is attached to the first wall, it is possible to enable emissions to enter the at least part of the collection cavity formed by the second wall directly after being discharged through the pressure relief mechanism disposed in the first wall, thereby improving the efficiency of discharge of the emissions.

In some possible implementations of the first aspect, the second wall is provided with a groove with an opening facing the pressure relief mechanism, the groove being used to form at least part of the collection cavity, and the pressure relief region being the opening of the groove.

With the above implementations, the groove can simultaneously function to accommodate the deformation of the pressure relief mechanism and accommodate the emissions, which facilitates the simplification of the structure of the box of the battery and the reduction of the volume of the battery, and enables the emissions to quickly enter the groove with the deformation of the pressure relief mechanism, thus improving the efficiency of the discharge of emissions, thereby reducing the amount of emissions that return to the electrical cavity.

In some possible implementations of the first aspect, a surface of the groove that is far from the battery cell protrudes from a surface, which is far from the battery cell, of a region of the second wall other than the groove.

Due to the limited thickness of the second wall, with the above implementations, the restriction of the depth of the groove by the thickness of the second wall can be reduced, so that the groove can have a larger volume, and can thus accommodate more emissions, which is conducive to enhancing the safety of the battery and makes it easy to be machined.

In some possible implementations of the first aspect, the second balance valve is disposed in a bottom wall and/or a side wall of the groove.

The emissions enter the interior of the groove through the opening of the groove and accumulate in the groove and come into direct contact with the bottom wall or the side wall of the groove, so that with the above implementations, it is possible to cause the second balance valve provided on the bottom wall and/or the side wall of the groove to be opened in a timely manner and the emissions to be discharged out of the box through the second balance valve in a timely manner.

In some possible implementations of the first aspect, the second wall is used to isolate the electrical cavity from the collection cavity.

With the above implementations, it is possible to separate the electrical cavity that accommodates the battery cell from the collection cavity that collects the emissions, thus avoiding mutual influence between the two.

In some possible implementations of the first aspect, the box further comprises: a protective member, the protective member being used to form the collection cavity with the second wall.

With the above implementations, the collection cavity can be formed by the second wall and the protective member, such that the second wall can be protected by the protective member. For example, during the use of the battery, the box of the battery may be subjected to external forces, while by providing the protective member, it is possible to prevent the second wall from being damaged under the external forces, and thus prevent the internal battery cells from being damaged, thereby improving the structural stability and safety of the battery.

In some possible implementations of the first aspect, the second balance valve is disposed in the protective member.

With the above implementations, when the protective member constitutes part of the collection cavity, the emissions can be discharged by providing a second balance valve on the protective member without affecting the original function and structure of the second wall.

In some possible implementations of the first aspect, the pressure relief region comprises a weak region provided in the second wall, the weak region being configured to be breakable when the pressure relief mechanism is actuated, so as to cause the emissions to pass through the weak region into the collection cavity.

With the above implementations, it is possible to cause the second wall to be in a sealed state when the pressure relief mechanism is not actuated, e.g., during normal use of the battery, which effectively protects the pressure relief mechanism and prevents the pressure relief mechanism from accidentally failing due to damage by external forces. When the pressure relief mechanism is actuated, the weak region can be broken so that the emissions are smoothly discharged out of the electrical cavity and enter the collection cavity without obstruction.

In some possible implementations of the first aspect, the pressure relief region comprises a through hole penetrating through the second wall, the through hole being used to enable the emissions to pass through the through hole into the collection cavity when the pressure relief mechanism is actuated.

With the above implementations, when the pressure relief mechanism is actuated, it is possible to cause the emissions discharged out through the pressure relief mechanism to enter directly into the collection cavity through the through hole, thereby enabling the emissions to be discharged out of the electrical cavity and enter into the collection cavity more quickly, thus reducing the amount of emissions discharged into the electrical cavity.

In some possible implementations of the first aspect, the first balance valve and the second balance valve satisfy:

$$0.1\text{mm} \leq \frac{(D+1)}{(P_2 \div P_1)} \leq 25\text{mm}$$, wherein P1 denotes an opening pressure of the first balance valve; P2 denotes an opening pressure of the second balance valve; and D denotes a minimum thickness of the pressure relief region.

When $\frac{(D+1)}{(P_2 \div P_1)}$ is too large, for example, exceeding the above limitation, the parameter ($D$ + 1) may be at a maximum value while ($P_2 \div P_1$) may be at a minimum value, meaning that the opening pressure $P_2$ of the second balance valve is relatively small while the opening pressure $P_1$ of the first balance valve is relatively large. At this time, due to the large thickness of the pressure relief region, when the battery undergoes thermal runaway, it is difficult for the emissions to break through the weak region to enter the second pathway, then most of the emissions discharged from the battery cell that undergoes thermal runaway will enter the electrical cavity, while only a small amount of emissions will break through the weak region and be discharged out of the electrical cavity, causing the effect of pressure relief of the second pathway to be weakened; moreover, since the opening pressure $P_1$ of the first balance valve is relatively large, i.e., the value of the pressure required to open the first balance valve is large, a large amount of emissions can easily accumulate in the electrical cavity, and this part of high-temperature emissions is prone to damaging other components in the electrical cavity, for example, it can easily lead to a short circuit of the busbar component, thus affecting the safety of the battery. Therefore, the parameter $\frac{(D+1)}{(P_2 \div P_1)}$ should not be set too large.

In contrast, when $\frac{(D+1)}{(P_2 \div P_1)}$ is too small, for example, exceeding the above limitation, the parameter ($D$ + 1) may be at a minimum value while ($P_2 \div P_1$) may be at a maximum value, meaning that the opening pressure $P_2$ of the second balance valve is relatively large while the opening pressure $P_1$ of the first balance valve is relatively small. When thermal runaway occurs in the battery, a large amount of emissions can easily enter the second pathway. On the one hand, this weakens the effect of pressure relief of the first pathway, and on the other hand, since the opening pressure $P_2$ of the second balance valve is large, which makes it difficult to be opened in time for pressure relief, the emissions will accumulate in the second pathway or the collection cavity and will not be discharged out of the box in time, which reduces the efficiency of discharge of the emissions and affects the safety of the battery. Therefore, the parameter $\frac{(D+1)}{(P_2 \div P_1)}$ should not be set too small either.

In some possible implementations of the first aspect, the first balance valve and the second balance valve satisfy:

$$0.1\text{mm} \leq \frac{(d+1)}{(P_2 \div P_1)} \leq 30\text{mm}$$, wherein $P_1$ denotes an opening pressure of the first balance valve; $P_2$ denotes an opening pressure of the second balance valve; and d denotes a minimum distance between a surface of the second wall facing the battery cell and the first wall.

When the parameter $\frac{(d+1)}{(P_2 \div P_1)}$ is too large, for example, exceeding the above limitation, the parameter $(d + 1)$ may be at a maximum value while the parameter $(P_2 \div P_1)$ is at a minimum value, meaning that the opening pressure $P_2$ of the second balance valve is relatively small while the opening pressure $P_1$ of the first balance valve is relatively large. At this time, since the minimum distance d between the second wall and the first wall is large, the thermal runaway of the battery cell causes a large amount of emissions discharged from the battery cell to enter the electrical cavity through the gap between the second wall and the first wall when the pressure relief mechanism is actuated. On the one hand, this weakens the effect of pressure relief of the second pathway, and on the other hand, since the opening pressure $P_1$ of the first balance valve is large, which makes it not easy to be opened in time for pressure relief, the emissions are likely to accumulate in the electrical cavity, affecting the safety of the other components in the electrical cavity, for example, it can easily lead to a short circuit of the busbar component, thus affecting the safety of the battery. Therefore, the parameter $\frac{(d+1)}{(P_2 \div P_1)}$ should not be set too large.

In contrast, when $\frac{(d+1)}{(P_2 \div P_1)}$ is too small, for example, exceeding the above limitation, the parameter $(d + 1)$ may be at a minimum value while the parameter $(P_2 \div P_1)$ may be at a maximum value, meaning that the opening pressure $P_2$ of the second balance valve is relatively large while the opening pressure $P_1$ of the first balance valve is relatively small. Since the minimum distance d between the second wall and the first wall is small, the thermal runaway of the battery cell causes a large amount of emissions discharged from the battery cell to be discharged out through the second pathway when the pressure relief mechanism is actuated, which weakens the effect of pressure relief of the first pathway; moreover, the emissions from the battery cell can easily enter the second pathway, but since the second balance valve cannot be opened in time to discharge the emissions out of the box, the emissions will accumulate in the collection cavity, which reduces the efficiency of discharge of the emissions and affects the safety of the battery. Therefore, the parameter $\frac{(d+1)}{(P_2 \div P_1)}$ should not be set too small either.

In some possible implementations of the first aspect, a first gap is provided between a surface of the second wall facing the battery cell and the first wall, and the first pathway comprises the first gap.

With the above implementations, on the one hand, it is easy to implement, and as no additional other components need to be added, space can be saved; and on the other hand, the provision of the first gap between the first wall and the second wall can reduce the sealing requirement for the electrical cavity, and in particular, the sealing requirement for the second wall can be reduced, which can reduce the difficulty of machining of the battery, thereby improving the machining efficiency of the battery.

In some possible implementations of the first aspect, the battery comprises: a connection structure, the connection structure being provided between the first wall and the second wall, and the connection structure being used to form part of the first pathway.

With the above implementations, at least part of the first pathway is implemented by the connection structure. On the one hand, this can improve the structural stability between the first wall and the second wall, especially when no thermal runaway occurs in the battery cell, the relative fixation between the first wall and the second wall can be implemented through this connection structure, or the sealing between the first wall and the second wall can also be realized; and on the other hand, by reasonably arranging the specific form and position of the connection structure, the position of the first pathway can be adjusted, and the directional discharge of the emissions passing through the first pathway can thus be realized, thereby improving the safety of the battery.

In some possible implementations of the first aspect, the connection structure is provided with a first flow channel, and the first pathway comprises the first flow channel.

With the above implementations, the emissions discharged through the pressure relief mechanism can be discharged to the electrical cavity through the first flow channel, so that by reasonably arranging the position of this first flow channel, directional discharge of the emissions can be realized, which reduces the influence of the emissions on components inside the electrical cavity, thereby improving the safety of the battery.

In some possible implementations of the first aspect, the battery comprises: a battery cell group, the battery cell group comprising a plurality of battery cells arranged in a first direction; and the electrical cavity comprises a third wall intersecting with the second wall, wherein a second gap is provided between an end face of the battery cell group facing the third wall and the third wall, and the first pathway comprises the second gap.

With the above implementations, at least part of the first pathway is implemented through the second gap, so that the machining difficulty can be reduced without the need to add additional components, and the sealing requirements between the end face and the third wall can also be reduced.

In some possible implementations of the first aspect, the battery comprises: a first spacing structure provided between the end face and the third wall, the first spacing structure being used to form at least part of the first pathway.

With the above implementations, at least part of the first pathway is formed by the first spacing structure. On the one hand, this can improve the structural stability between the end face and the third wall, especially when no thermal runaway occurs in the battery cell, the relative fixation between the end face and the third wall can be implemented through this first spacing structure, or the sealing between the end face and the third wall can also be realized; and on the other hand, by reasonably arranging the specific form and position of the first spacing structure, the position and direction of the first pathway can be adjusted, and the directional discharge of the emissions passing through the first pathway can thus be realized, thereby improving the safety of the battery.

In some possible implementations of the first aspect, the first spacing structure is provided with a second flow channel, and the first pathway comprises the second flow channel.

With the above implementations, the emissions discharged through the pressure relief mechanism can be discharged through the second flow channel, so that by reasonably arranging the position of this second flow channel, directional discharge of the emissions can be realized, which reduces the influence of the emissions on the components inside the electrical cavity, for example, avoiding the influence on the electrode terminals and the busbar components, thereby improving the safety of the battery.

In some possible implementations of the first aspect, the battery further comprises: a second spacing structure provided between two adjacent battery cells of the battery cells, the second spacing structure being used to form at least part of the first pathway.

With the above implementations, the second spacing structure provided between two adjacent battery cells in the battery can be used to absorb expansion and deformation of the battery cells under normal use of the battery cells; and when the isolation component below the battery cells is a thermal management component, it can also be used to block water vapor generated by the thermal management component; and in the event of thermal runaway in the battery cell, on the one hand, it can block the heat transferred between the battery cells, and on the other hand, this second spacing structure can be used to form at least part of the first pathway, then the second spacing structure can allow a small amount of emissions to be discharged to the electrical cavity, which increases the discharging path for the emissions, and also improves the efficiency of discharge of the emissions.

In some possible implementations of the first aspect, the second spacing structure is configured to be broken when the pressure relief mechanism is actuated so as to form a third gap between the two adjacent battery cells of the battery cells, and the first pathway comprises the third gap.

With the above implementations, by reasonably selecting the material of the second spacing structure, the second spacing structure can be broken when the pressure relief mechanism is actuated, thereby forming a third gap without additional machining of the second spacing structure, which is simpler and can also ensure the sealing and stability of the battery cell during normal use.

In some possible implementations of the first aspect, the second spacing structure is provided with a third flow channel, and the first pathway comprises the third flow channel.

With the above implementations, the second spacing structure is provided with a third flow channel, and the first pathway comprises the third flow channel. By reasonably arranging the position of the third flow channel, directional discharge of emissions can be realized, which reduces the influence of the emissions on components inside the electrical cavity, and thus thermal diffusion between the battery cells can be avoided, which in turn improves the safety of the battery.

In some possible implementations of the first aspect, the battery comprises at least one first balance valve and at least one second balance valve, and the first balance valve and the second balance valve satisfy:

$$0.017 \leq \frac{(S_1 \div S_2)}{(P_2 \div P_1)} \leq 60$$ . wherein $S_1$ denotes a total pressure relief area of all the first balance valves comprised in the battery; $S_2$ denotes a total pressure relief area of all the second balance valves comprised in the battery; $P_1$ denotes an opening pressure of the first balance valves; and $P_2$ denotes an opening pressure of the second balance valves.

When the parameter $\frac{(S_1 \div S_2)}{(P_2 \div P_1)}$ is too large, for example, exceeding the above limitation, then the parameter ($S_1 \div S_2$) may be at a maximum value, which means that the pressure relief area of the first balance valve may be at a maximum value, while the pressure relief area of the second balance valve is at a minimum value, and the parameter ($P_2 \div P_1$) is at a minimum value, then the valve opening pressure of the second balance valve may be at a minimum value, while the valve opening pressure of the first balance valve may be at a maximum value, so that the second balance valve has a small valve opening pressure, and thus may be opened in time to discharge the emissions from the box, but the pressure relief area of the second balance valve is too small, which can easily result in the emissions being discharged from the box at a small speed, thus resulting in the failure to realize a good pressure relief effect even if the second balance valve can be opened in time. Moreover, although the pressure relief area of the first balance valve is large, the valve opening pressure of the first balance valve is too large, so that the emissions cannot be discharged out of the box in a timely manner through the first balance valve, meaning that they can easily cause accumulations of the emissions in the electrical cavity, thus compromising the safety of the electrical cavity.

When the parameter $\frac{(S_1 \div S_2)}{(P_2 \div P_1)}$ is too small, for example, exceeding the above limitation, then the parameter ($S_1 \div S_2$) may be at a minimum value, for example, the pressure relief area of the first balance valve is at a minimum value and the pressure relief area of the second balance valve is at a maximum value; and the parameter ($P_2 \div P_1$) may be at a maximum value, for example, the valve opening pressure of the second balance valve is at a maximum value and the valve opening pressure of the first balance valve is at a minimum value. At this time, it is extremely easy to open the first balance valve, making it easy for the emissions to be discharged to the electrical cavity through the first pathway, but due to the small pressure relief area of the first balance valve, the emissions can easily be accumulated in the electrical cavity, which influences the safety of the electrical cavity; and at the same time, although the second balance valve has a sufficient pressure relief area, since the opening pressure of the second balance valve is too large, the emissions are difficult to be discharged to the outside of the box through the second balance valve, which can lead to the subsequent accumulation in the collection cavity, and can also easily lead to an increase in the amount of emissions that flow back into the electrical cavity, thereby compromising the safety of the electrical cavity.

In a second aspect, there is provided an electrical device comprising a battery as described in the first aspect or any possible implementation of the first aspect, the battery being used to provide electrical energy to the electrical device.

In some possible implementations of the second aspect, the electrical device is a vehicle, a ship or a spacecraft.

**Description of Drawings**

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings can also be obtained according to the drawings without any creative effort.

Fig. 1 is a schematic structural diagram of a vehicle disclosed in an embodiment of the present application;

Figs. 2 to 3 are schematic exploded structural diagrams from different perspectives of a battery disclosed in an embodiment of the present application;

Fig. 4 is a cross-sectional schematic diagram of a battery of the embodiment of Figs. 2 to 3;

Figs. 5 to 6 are schematic exploded structural diagrams from different perspectives of a battery disclosed in another embodiment of the present application;

Fig. 7 is a cross-sectional schematic diagram of a battery disclosed in another embodiment of the present application;

Fig. 8 is a schematic exploded structural diagram of a battery disclosed in the another embodiment of the present application;

Fig. 9 is a cross-sectional schematic diagram of a battery disclosed in the embodiment in Figs. 7 to 8;

Fig. 10 is a top view of a battery disclosed in an embodiment of the present application;

Fig. 11 is a cross-sectional schematic diagram of a battery disclosed in another embodiment of the present application;

Fig. 12 is a partial cross-sectional enlarged view at B in Fig. 11;

Fig. 13 is a cross-sectional schematic diagram of a battery disclosed in another embodiment of the present application;

Fig. 14 is a partial cross-sectional enlarged view at C in Fig. 13;

Fig. 15 is a cross-sectional schematic diagram of a battery disclosed in another embodiment of the present application;

Fig. 16 is a partial cross-sectional enlarged view at E in Fig. 15;

Fig. 17 is a cross-sectional schematic diagram of a battery disclosed in another embodiment of the present application;

Fig. 18 is a partial cross-sectional enlarged view at F in Fig. 17;

Fig. 19 is a cross-sectional schematic diagram of a battery disclosed in another embodiment of the present application;

Fig. 20 is a schematic diagram of a connection structure of a battery disclosed in another embodiment of the present application;

Fig. 21 is a cross-sectional schematic diagram of a battery disclosed in another embodiment of the present application;

Fig. 22 is a partial cross-sectional enlarged view at G in Fig. 21;

Fig. 23 is a schematic diagram of a battery cell group and a second spacing structure disclosed in another embodiment of the present application; and

Fig. 24 is a schematic structural diagram of a second spacing structure disclosed in an embodiment of the present application.

In the drawings, the drawings are not drawn to actual scale.

**Detailed Description**

Embodiments of the present application will be described in further detail hereinafter in conjunction with the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are only used for descriptive purposes, and cannot be construed as indicating or implying relative importance. "Vertical" does not mean being vertical in the strict sense, but within the permissible range of error. "Parallel" does not mean being parallel in the strict sense, but within the permissible range of error.

Orientation words appearing in the following description are all directions shown in the drawings, and do not limit the specific structure of the present application. In the description of the present application, it should also be noted that, unless otherwise expressly specified and defined, the terms "install", "connected" and "connect" should be understood in a broad sense, for example, they may be fixedly connected, detachably connected or integrally connected; and they may be directly connected or indirectly connected through an intermediate medium. For those of ordinary skill in the art, the specific meanings of the above terms in the present application may be understood according to specific circumstances.

In the embodiments of the present application, the same reference numerals indicate the same parts and, for the sake of brevity, the detailed description of the same parts is omitted in the different embodiments. It should be understood that the dimensions such as the thickness, length, and width of various components in the embodiments of the present application shown in the drawings, as well as the dimensions such as the overall thickness, length, and width of the integrated apparatus are illustrative only and shall not constitute any limitation on the present application.

In the present application, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in embodiments of the present application. The battery cell may be cylindrical, flat, rectangular, or in other shapes, which is also not limited in embodiments of the present application. The battery cells are generally divided into three types according to encapsulating manners: cylindrical battery cells, prismatic rectangular battery cells, and pouch cells, which are not limited in embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for encapsulating one or more battery cells. The box can prevent liquids or other foreign matters from affecting the charging or discharging of the battery cells.

The battery cell includes an electrode assembly and an electrolyte solution, the electrode assembly being composed of a positive electrode plate, a negative electrode plate, and a separator. The battery cell works mainly relying on the movement of metal ions between the positive electrode plate and the negative electrode plate. The positive electrode plate includes a positive electrode current collector and a positive electrode active material layer, wherein the positive electrode active material layer is coated on a surface of the positive electrode current collector. Current collectors not coated with the positive electrode active material layer protrude from current collectors already coated with the positive electrode active material layer, and the current collectors not coated with the positive electrode active material layer serve as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, wherein the negative electrode active material layer is coated on a surface of the negative electrode current collector. Current collectors not coated with the negative electrode active material layer protrude from current collectors coated with the negative electrode active material layer, and the current collectors not coated with the negative electrode active material layer serve as a negative tab. The material of the negative electrode current collector may be copper, and the negative electrode active material may be carbon, silicon, or the like. In order to ensure that no fusing occurs when a large current passes, there are a plurality of positive tabs which are laminated together, and there are a plurality of negative tabs which are laminated together. The material of the separator may be polypropylene(PP) or

EP 4 404 357 B1

polyethylene(PE), or the like. In addition, the electrode assembly may be of a wound structure or a laminated structure, and embodiments of the present application are not limited thereto.

Many design factors, such as energy density, cycle life, discharge capacity, charge-discharge rate and other performance parameters, should be considered in the development of the battery technology. In addition, the safety of the battery also needs to be taken into account. For batteries, the main safety hazards come from the charging and discharging process. In order to improve the safety performance of battery cells, a pressure relief mechanism is usually provided for the battery cells. The pressure relief mechanism refers to an element or component that is actuated to relieve the internal pressure or temperature of a battery cell when the internal pressure or temperature reaches a predetermined threshold. The predetermined threshold may be adjusted according to different design requirements. For example, the predetermined threshold may depend on the material of one or more of the positive electrode plate, the negative electrode plate, the electrolyte, and the separator in the battery cell. The pressure relief mechanism may utilize an element or component, such as a pressure-sensitive or temperature-sensitive element or component, which means that when the internal pressure or temperature of the battery cell reaches a predetermined threshold, the pressure relief mechanism is actuated, thereby forming a channel available for the internal pressure or temperature to be relieved.

The current designs of the pressure relief mechanism are mainly concerned with releasing the high pressure and heat inside the battery cell, that is, discharging the emissions from the battery cell to the outside of the battery cell through the pressure relief mechanism. However, how to arrange the discharging path for this high-temperature and high-pressure emissions after they are discharged from the battery cell so that the emissions can be discharged in a timely and smooth manner to avoid causing further safety problems to the battery is one of the urgent problems that need to be solved nowadays.

In view of the foregoing, the present application provides a battery having a box that comprises an electrical cavity to accommodate battery cells. The battery cell further comprises a first pathway and a second pathway, the first pathway and the second pathway being capable of communicating with the interior of the battery cell via the pressure relief mechanism when the pressure relief mechanism is actuated. Among them, the first pathway is capable of discharging the emissions discharged from the pressure relief mechanism into the electrical cavity, and the second pathway is used to discharge the emissions discharged from the pressure relief mechanism from the electrical cavity to the outside of the electrical cavity. In this way, the emissions discharged through the pressure relief mechanism can be divided into two pathways and discharged simultaneously, and thus the discharging rate can be increased. Additionally, the battery further comprises a first balance valve and a second balance valve, wherein the first balance valve is used to discharge emissions passing through the first pathway out of the box and the second balance valve is used to discharge emissions passing through the second pathway out of the box. In this way, residual emissions flowing back to the electrical cavity through the first pathway can be discharged out of the box through the first balance valve, and emissions discharged out of the electrical cavity through the second pathway can also be discharged out of the box through the second balance valve, which avoids accumulation of emissions in the box and further increases the discharging rate and thus prevents thermal damage to components inside the box. The technical solutions described in embodiments of the present application are all applicable to a variety of electrical devices using batteries.

The electrical device described above may be, but is not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. Embodiments of the present application do not impose special limitations on the above electrical device.

For the convenience of illustration, the following embodiments are illustrated with the electrical device being a vehicle as an example.

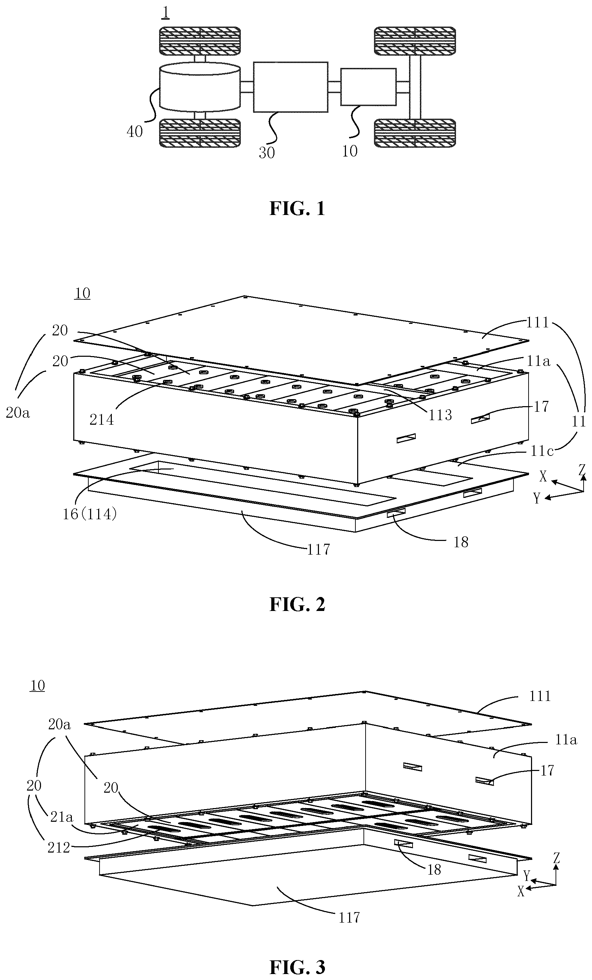

As an example, as shown in Fig.1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid vehicle, an extended range electric vehicle, or the like. The interior of the vehicle 1 can be provided with a motor 40, a controller 30, and a battery 10, and the controller 30 is used for controlling the battery 10 to power the motor 40. As an example, the battery 10 may be arranged at the bottom or the head or the tail of the vehicle 1. The battery 10 may be configured to supply power to the vehicle 1. As an example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can serve not only as an operating power supply for the vehicle 1, but also as a driving power source for the vehicle 1, so as to replace or partially replace fuel or natural gas to provide driving power for the vehicle 1.

In order to meet different power requirements for use, the battery may include a plurality of battery cells, wherein the plurality of battery cells may be connected to each other in a series connection or a parallel connection or a parallel-series connection which is a mixture of series and parallel connections. The battery may also be called a battery pack. As an example, the multiple battery cells may first be connected in a series connection or a parallel connection or a parallel-series connection to form battery modules, and multiple battery modules may then be connected in a series connection or a parallel connection or a parallel-series connection to form a battery. In other words, the plurality of battery cells can directly form a battery, or can first form battery modules, and the battery modules then form a battery.

For ease of description, the present application is described mainly taking the box 11 as shown in Figs. 2 to 4 as an example, and embodiments of the present application are not limited thereto. Again for ease of description, a spatial coordinate system is established based on the battery 10 in the drawings of embodiments of the present application. As shown in Figs. 2 to 4, the box 11 of the battery 10 accommodates a plurality of battery cells 20 arranged in a first direction, the first direction being the X-axis direction of the spatial coordinate system; a plurality of battery cells 20 are arranged in the first direction to form a battery cell group 20a, and two battery cell groups 20a are provided side-by-side in the box 11 along a second direction perpendicular to the first direction, the second direction being the Y-axis of the spatial coordinate system, and the Z-axis of the spatial coordinate system being perpendicular to a plane constituted by the X-axis and the Y-axis. The battery 10 of embodiments of the present application will be described in detail below in conjunction with the drawings.

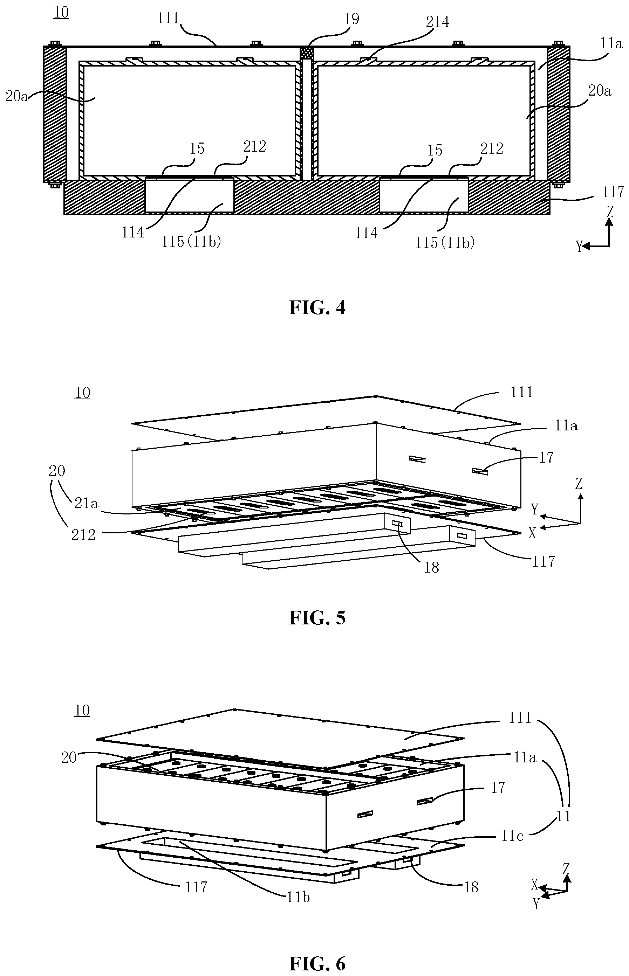

Figs. 2 to 3 illustrate schematic exploded structural diagrams of the battery 10 of an embodiment of the present application in different directions, and Fig. 4 illustrates a cross-sectional schematic diagram of the battery 10 of this embodiment in the Y-Z plane. As shown in Figs. 2 to 4, the battery 10 may comprise: a box 11 comprising an electrical cavity 11a; a battery cell 20 accommodated in the electrical cavity 11a, a first wall 21a of the battery cell 20 being provided with a pressure relief mechanism 212; a first pathway 15 and a second pathway 16, wherein the first pathway 15 and the second pathway 16 are configured to be capable of communicating with an interior of the battery cell 20 via the pressure relief mechanism 212 when the pressure relief mechanism 212 is actuated, wherein the first pathway 15 is used to discharge emissions discharged from the pressure relief mechanism 212 into the electrical cavity 11a; and the second pathway 16 is used to discharge the emissions discharged from the pressure relief mechanism 212 out of the electrical cavity 11a; a first balance valve 17 for discharging emissions passing through the first pathway 15 out of the box 11; and a second balance valve 18 for discharging emissions passing through the second pathway 16 out of the box 11.

It should be understood that the shape of the battery cell 20 of embodiments of the present application can be set according to the actual application. For example, the present application is described mainly taking the rectangular battery cell 20 as an example, but embodiments of the present application are not limited thereto, for example, the battery cell 20 may also be cylindrical or of other shapes. The first wall 21a may be any one of the walls of the battery cell 20.

It should be understood that the pressure relief mechanism 212 of embodiments of the present application is an element or component that is actuated to relieve the internal pressure or temperature when the internal pressure or temperature of the battery cell 20 reaches a predetermined threshold. This threshold design varies depending on the design requirements. The threshold may depend on the material of one or more of the positive electrode plate, the negative electrode plate, the electrolyte, and the separator in the battery cell 20.

The term "actuate" referred to in the present application means that the pressure relief mechanism 212 conducts an action or is activated to a certain state, so that the internal pressure and temperature of the battery cell 20 can be relieved. The action produced by the pressure relief mechanism 212 may include, but is not limited to: at least part of the pressure relief mechanism 212 being broken, crushed, torn or opened, and the like. When the pressure relief mechanism 212 is actuated, high-temperature and high-pressure substances inside the battery cell 20 are discharged as emissions outwardly from the actuated part. In this manner, it is possible to enable the battery cell 20 to undergo pressure and temperature relief under controllable pressure or temperature, thus avoiding the occurrence of potentially more serious accidents.

The emissions from the battery cell 20 referred to in the present application include, but are not limited to: electrolyte solution, dissolved or split positive and negative electrode plates, separator fragments, high-temperature and high-pressure gases produced from reactions, flames, and the like.

This pressure relief mechanism 212 of embodiments of the present application is provided in the first wall 21a of the battery cell 20, and the pressure relief mechanism 212 may be part of the first wall 21a, or may be of a split structure from the first wall 21a so as to be secured to the first wall 21a by means of, for example, welding. For example, when the pressure relief mechanism 212 is part of the first wall 21a, for example, the pressure relief mechanism 212 may be formed by providing an indentation in the first wall 21a, with the thickness of the first wall 21a corresponding to the indentation being less than the thickness of the other regions of the pressure relief mechanism 212 except at the indentation. The indentation is the weakest point of the pressure relief mechanism 212. When too much gas is generated by the battery cell 20 so that the internal pressure of the box 11 rises and reaches a threshold, or when the heat generated by the internal reaction of the battery cell 20 causes the internal temperature of the battery cell 20 to rise and reach a threshold, the pressure relief mechanism 212 can be broken at the indentation and thus lead to communication between the inside and the outside of the box 11, so that the gas pressure and temperature are released outwardly through the cracking of the pressure relief mechanism 212.

As a further example, the pressure relief mechanism 212 may also be of a split structure with the first wall 21a, and the pressure relief mechanism 212 may take the form of, for example, an explosion-proof valve, an air valve, a pressure relief valve, or a safety valve, and may specifically employ a pressure-sensitive or temperature-sensitive element or construction. That is to say, when the internal pressure or temperature of the battery cell 20 reaches a predetermined threshold, the pressure relief mechanism 212 performs an action, or a weak structure provided in the pressure relief mechanism 212 is broken, so as to form an opening or channel through which the internal pressure or temperature can be relieved.

It should be understood that the electrical cavity 11a of embodiments of the present application is used to accommodate the battery cell 20, that is, the electrical cavity 11a provides a mounting space for the battery cell 20, as shown in Figs. 2 to 4. The electrical cavity 11a may be sealed or unsealed. The shape of the electrical cavity 11a may be determined according to the accommodated one or more battery cells 20 and busbar component 12. For example, Figs. 2 to 4 take the electrical cavity 11a being rectangular as an example, but embodiments of the present application are not limited thereto.

In the event that thermal runaway or other abnormal conditions occur in the battery cell 20, high-temperature and high-pressure emissions generated inside the battery cell are discharged towards the direction in which the pressure relief mechanism 212 is provided in the battery cell 20, and the power and destructive force of such emissions are usually so great that if only one pathway is provided, it is likely to break through the structure of this pathway or break through one or more structures disposed around that pathway, resulting in a further safety problem. Accordingly, the box 11 of the battery 10 of embodiments of the present application comprises an electrical cavity 11a to accommodate a battery cell, and the battery 10 further comprises a first pathway 15 and a second pathway 16, the first pathway 15 and the second pathway 16 being capable of communicating with the interior of the battery cell 20 via the pressure relief mechanism 212 when the pressure relief mechanism 212 is actuated, wherein the first pathway 15 is capable of discharging emissions discharged from the pressure relief mechanism 212 into the electrical cavity 11a, and the second pathway 16 is used to discharge the emissions discharged from the pressure relief mechanism 212 out of the electrical cavity 11a. In this way, the emissions discharged through the pressure relief mechanism 212 can be divided into two pathways and discharged simultaneously, and thus the discharging rate can be increased. The first balance valve 17 can discharge the emissions passing through the first pathway 15 out of the box 11, and the second balance valve 18 can discharge the emissions passing through the second pathway 16 out of the box 11, which avoids thermal diffusion arising from the accumulation of the emissions in the box 11, and further increases the discharging rate and thus prevents thermal damage to components inside the box, thereby improving the safety of the battery 10.

It should be understood that the electrical cavity 11a of embodiments of the present application may also be used to accommodate other components, for example, it may also be used to accommodate the busbar component 12, that is, the electrical cavity 11a provides mounting space for the battery cell 20 and the busbar component 12. The busbar component 12 is used to realize the electrical connection between the plurality of battery cells 20, such as a parallel connection or a series connection or a parallel-series connection. The busbar component 12 can realize the electrical connection between the battery cells 20 by connecting the electrode terminals 214 of the battery cells 20. In some embodiments, the busbar component 12 may be fixed to the electrode terminals 214 of the battery cells 20 by means of welding.

The battery cell 20 may include at least two electrode terminals 214, the at least two electrode terminals 214 including at least one positive electrode terminal and at least one negative electrode terminal. The electrode terminals 214 of embodiments of the present application are used to electrically connect to the tabs of the electrode assembly inside the battery cell 20 to output electrical energy. The at least two electrode terminals 214 of embodiments of the present application may be provided on the same wall or on different walls of the battery cell 20. For example, as shown in Figs. 2 to 4, embodiments of the present application are mainly illustrated using an example in which the battery cell 20 comprises two electrode terminals 214 and the two electrode terminals 214 are provided on the same wall. For example, the two electrode terminals 214 may be disposed on a wall provided opposite to the first wall 21a, but embodiments of the present application are not limited thereto.

As shown in Figs. 2 to 4, the electrical cavity 11a of the present application comprises a second wall 11c, the second wall 11c facing the first wall 21a. In this way, the pressure relief mechanism 212 of the battery cell 20 is oriented towards the wall of the electrical cavity 11a rather than towards other battery cells 20, which can facilitate the provision of an avoidance region on the wall of the electrical cavity 11a for providing an avoidance space for the deformation of the pressure relief mechanism 212, thereby making it possible to improve the space utilization rate of the battery 10, and also to reduce the risk of the battery cell 20 that experiences thermal runaway causing thermal runaway in other battery cells 20, thus improving the safety of the battery 10.

Optionally, this second wall 11c may be any one of the walls of the electrical cavity 11a that faces the first wall 21a. For example, as shown in Figs. 2 to 4, the electrical cavity 11a may be of a hollow polyhedral structure, that is, the electrical cavity 11a may be formed through the enclosure of a plurality of walls, and this second wall 11c may be any one of the plurality of walls.

As a further example, the box 11 may further include at least one beam 113, the at least one beam 113 dividing the electrical cavity 11 into a plurality of sub-electrical cavities, with each sub-electrical cavity accommodating a battery cell group 20a, which battery cell group 20a may include a plurality of battery cells 20. For example, as in the embodiment shown in Figs. 2 to 4, the box 11 may include a beam 113 parallel to the first direction X. The beam 113 divides the electrical cavity 11a into two sub-electrical cavities, each of which accommodates one battery cell group 20a, and in this embodiment, the second wall 11c of the electrical cavity 11a may also be the beam 113. In this embodiment, the wall of the battery cell 20 facing the beam 113 is the first wall 21a, wherein the first wall 21a is provided with a pressure relief mechanism 212, and the wall of the beam 113 that is opposite to the first wall 21a constitutes the second wall 11c. Optionally, this second wall 11c may also be a top or side wall of the electrical cavity 11a, which is not limited in the present application.

Optionally, the first balance valve 17 of the present application is disposed on a wall of the electrical cavity 11a other than the second wall 11c. Since the second wall 11c will be directly impacted by the emissions when a pressure relief occurs in the battery cell 20, this is likely to lead to a failure or the like of the first balance valve 17; and since a structure such as a pressure relief region 114 may also be provided on this second wall 11c, in the condition of limited space, the provision of the first balance valve 17 on the second wall 11c is not conducive to discharging the emissions out of the electrical cavity 11. Therefore, the first balance valve 17 is provided on a wall of the electrical cavity 11 other than the second wall 11 For example, when the box 11 is a cuboid, this first balance valve 17 may be located on any of the walls that enclose the cuboid other than the second wall 11c. For example, in the embodiment of Figs. 2 to 4, the first balance valve 17 is provided on a wall of the box 11 that is parallel to the Y-Z plane. When the box 11 is of other shapes, the position of the first balance valve 17 can also be adjusted according to the shape and mounting position of the box 11.

In the embodiment shown in Figs. 2 to 4, a total of two first balance valves 17 are provided on the electrical cavity 11a. Optionally, the number of such first balance valves 17 may be one or a plurality, and the number of the first balance valves 17 may be set according to the specific structure of the battery 10, for example, the number of the sub-electrical cavities 11a or the structural dimensions of the battery 10; and it may also be set according to the magnitude of the amount of emissions when the battery 10 undergoes a pressure relief. The first balance valve 17 may be provided at an appropriate position of the electrical cavity 11a according to the structure of the battery 10, and when the battery 10 comprises a plurality of first balance valves 17, the first balance valves 17 may be uniformly distributed on the walls of the electrical cavity 11a, or they may be provided according to the specific structure of the battery 10, for example, they may be provided at positions close to the pressure relief mechanism 212.

Optionally, this first balance valve 17 may be of a type such as a spring-type valve or a lever-type valve. Optionally, this first balance valve 17 may be pressure-actuated, meaning that it opens for pressure relief as soon as the pressure inside the electrical cavity 11a reaches a certain threshold, and optionally, it may also be actuated according to other parameters such as temperature. When the battery 10 is in a normal state, i.e., when the pressure inside the electrical cavity 11a is below a preset pressure threshold, this first balance valve 17 is in a closed state, and when the battery 10 undergoes a pressure relief, the first balance valve 17 opens to discharge the emissions to the outside of the box 11. Optionally, this first balance valve 17 may be a reusable valve, that is, after the pressure relief is completed, the first balance valve 17 may close by itself once the internal pressure of the electrical cavity 11a is restored to below the threshold value; optionally, the first balance valve 17 may also be a destructive valve, that is, the valve structure is broken or partially broken when the valve opens so as to form an exhaust pathway. The type of the first balance valve 17 may also be other types, which is not limited in the present application.

Optionally, the second wall 11c of embodiments of the present application is provided with a pressure relief region 114 corresponding to the pressure relief mechanism 212, wherein the pressure relief region 114 is used to form at least part of the second pathway 16, that is, the emissions can be discharged out of the electrical cavity 11a through the pressure relief region 114. The pressure relief region 114 can provide a deformation space for the pressure relief mechanism 212 when it is actuated, so as to avoid untimely actuation of the pressure relief mechanism 212 caused by the second wall 11c blocking the pressure relief mechanism, and then the emissions can be quickly discharged by the pressure relief mechanism 212, and the emissions can be discharged out of the electrical cavity 11a through the pressure relief region 114; therefore, by providing the pressure relief region 114, the influence of the emissions on components inside the electrical cavity 11a can be reduced.

It should be understood that each pressure relief region 114 provided on the second wall 11c may correspond to one or more pressure relief mechanisms 212. For example, the second wall 11c is provided with a plurality of pressure relief regions 114, the plurality of pressure relief regions 114 being in one-to-one correspondence with the pressure relief mechanisms 212 of the plurality of battery cells 20. As a further example, as shown in Figs. 2 to 4, the second wall 11c is provided with one or more pressure relief regions 114, each pressure relief region 114 corresponding to a plurality of pressure relief mechanisms 212.

It should be understood that the pressure relief region 114 in embodiments of the present application can be implemented in a variety of ways. Different embodiments will be described in detail below in conjunction with the drawings.

Optionally, as shown in Figs. 2 to 4, the box 11 of embodiments of the present application may further comprise: a collection cavity 11b for collecting emissions discharged through the second pathway 16 when the pressure relief mechanism 212 is actuated, the second balance valve 18 being provided on a wall of said collection cavity so as to discharge the emissions out of the box 11 in time. The collection cavity 11b can collect and/or process the emissions in a centralized manner, for example, the collection cavity 11b can cool down the emissions entering the collection cavity 11b to avoid thermal diffusion between battery cells 20 caused by the emissions; and then the emissions can be discharged out to the outside of the box 11 of the battery 10 through the second balance valve 18 provided in the collection cavity 11b, which can avoid accumulation of a large amount of the emissions in the collection cavity 11b which in turn affects the safety performance of the battery 10. The collection cavity 11b may be sealed or unsealed. In some embodiments, the collection cavity 11b may contain air or other gases. Optionally, in the collection cavity 11b, a liquid, such as a cooling medium, may be contained or, a component that accommodates the liquid may be provided to further cool down the emissions entering the collection cavity 11b. Further optionally, the gas or liquid within the collection cavity 11b may be flowing in a circular manner.

As shown in Figs. 2 to 4, in embodiments of the present application, emissions may be discharged to the collection cavity 11b via the pressure relief region 114, and optionally, when the box 11 has no collection cavity 11b, emissions may also be discharged directly to the outside of the box 11 via the pressure relief region 114.

Optionally, the collection cavity 11b in embodiments of the present application can be implemented in a variety of ways. For example, as shown in Figs. 2 to 4, the second wall 11c is used to form at least part of the collection cavity 11b. In this embodiment, the second wall 11c is a wall of a protective member 117 that faces the first wall 21a, and the second wall 11c is provided with a groove with an opening facing the first wall 21a, so that when a battery cell undergoes a pressure relief, the opening of the groove is the pressure relief region 114, which can simplify the structure of the box 11, and this second wall 11c is attached to the first wall 21a, which enables the emissions to be discharged through the pressure relief mechanism 212 disposed in the first wall 21a, and then directly enter the at least part of the collection cavity 11b formed by this second wall 11c through the pressure relief region 114, thereby improving the efficiency of discharge of the emissions.

Optionally, as shown in Figs. 2 to 4, the second wall 11c is provided with a groove 115 with an opening facing the pressure relief mechanism, the groove 115 being used to form at least part of the collection cavity 11b, the pressure relief region 114 being the opening of the groove 115. The groove 115 can simultaneously function to accommodate the deformation of the pressure relief mechanism 212 and accommodate the emissions, which facilitates the simplification of the structure of the box 11 of the battery 10 and the reduction of the volume of the battery, and enables the emissions to quickly enter the groove with the deformation of the pressure relief mechanism 212, thus improving the efficiency of the discharge of emissions, thereby reducing the amount of emissions that return to the electrical cavity 11a.

It should be understood that the groove 115 of the second wall 11c of embodiments of the present application may be implemented in a variety of ways. For example, as shown in Figs. 2 to 4, the thickness of the second wall 11c is greater than the depth of the groove 115, which can enhance the strength of the second wall 11c and the effect of protection of components inside the box 11, and make the box 11 have a regular outer surface, thus facilitating the mounting of the battery 10.

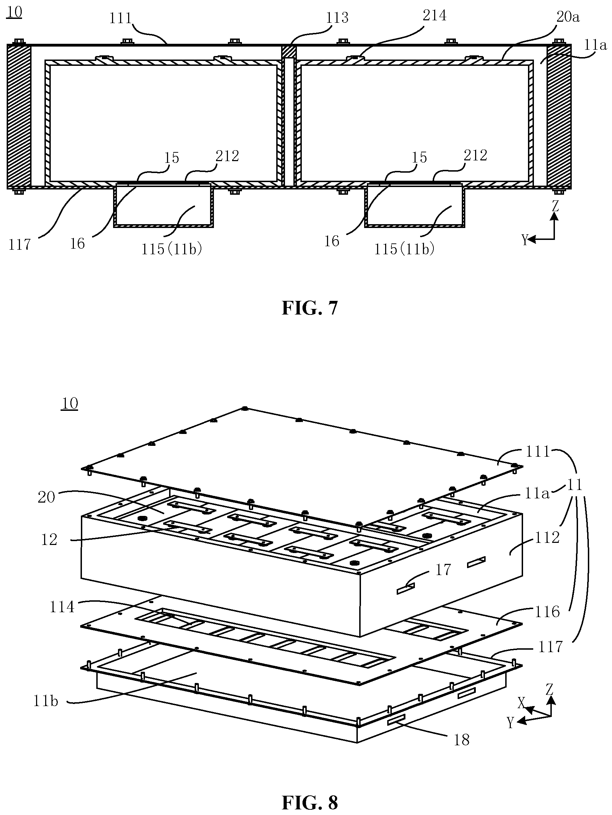

Optionally, different from the way of arrangement as shown in Figs. 2 to 4, the groove 115 may be provided in other ways. For example, Figs. 5 to 6 illustrate schematic exploded structural diagrams of the battery 10 of an embodiment of the present application in different directions, and Fig. 7 illustrates a cross-sectional schematic diagram of the battery 10 of the embodiment in the Y-Z plane, wherein, as illustrated in Figs. 5 to 7, the surface of the groove 115 that is far from the battery cell 20 protrudes from the surface, which is far from the battery cell 20, of a region of the second wall 11c other than the groove 115. Due to the limited thickness of the second wall 11c, with the above implementations, the restriction of the depth of the groove 115 by the thickness of the second wall 11c can be reduced, so that the groove 115 can have a larger volume, and thus can accommodate more emissions, which is conducive to enhancing the safety of the battery and makes it easy to be machined.

Optionally, as shown in Figs. 2 to 7, the second balance valve 18 may be provided on the bottom wall and/or the side wall of the groove 115, and the specific position may be determined according to the structure and the mounting method of the battery 10, so as to enable emissions to be discharged quickly out of the collection cavity 11b. The emissions enter the interior of the groove 115 through the opening of the groove 115 and accumulate in the groove 115 and come into direct contact with the bottom wall or the side wall of the groove 115, so that with the above implementations, it is possible to cause the second balance valve 18 provided on the bottom wall and/or the side wall of the groove 115 to be opened in a timely manner and the emissions to be discharged out of the box 11 through the second balance valve 18 in a timely manner.

In both of the embodiments shown in Figs. 2 to 4 and Figs. 5 to 7, the second wall 11c is provided with two grooves 115, and the wall of each of the grooves 115 is provided with two second balance valves 18. Optionally, unlike the above implementation, the number of the second balance valves 18 may be one or a plurality, and the number of the second balance valves 18 may be set according to the specific structure of the battery 10, such as the number or specific structure of the grooves 115 or the collection cavities 11b; or it may be set according to the magnitude of the amount of emissions when the battery 10 undergoes a pressure relief. The second balance valve 18 may be provided at an appropriate position of the collection cavity 11b or the groove 115 according to the structure of the battery 10, and when the battery 10 comprises a plurality of first balance valves 18, the first balance valves 18 may be uniformly distributed on the walls of the collection cavity 11b or the groove 115, or they may be provided according to the specific structure of the battery 10, for example, they may be provided at positions close to the pressure relief mechanism 212.

Optionally, this second balance valve 18 may be of a type such as a spring-type valve or a lever-type valve. Optionally, this second balance valve 18 may be pressure-actuated, meaning that it opens for pressure relief as soon as the pressure inside the collection cavity 11b reaches a certain threshold, and optionally, it may also be actuated according to other parameters such as temperature. When the battery 10 is in a normal state, i.e., when the pressure inside the collection cavity 11b is below a preset pressure threshold, this second balance valve 18 is in a closed state, and when the battery 10 undergoes a pressure relief, the second balance valve 18 opens to discharge the emissions to the outside of the box 11. Optionally, this second balance valve 18 may be a reusable valve, that is, after the pressure relief is completed, the second balance valve 18 may close by itself once the internal pressure of the collection cavity 11b is restored to below the threshold value; optionally, the second balance valve 18 may also be a destructive valve, that is, the valve structure is broken or partially broken when the valve opens so as to form an exhaust pathway. The type of the second balance valve 18 may also be other types, which is not limited in the present application.

Optionally, the collection cavity 11b of embodiments of the present application may also be formed in other ways. For example, in order to provide a better isolation effect, the second wall 11c of embodiments of the present application is also used to isolate the electrical cavity 11a from the collection cavity 11b, as shown in Figs. 8 to 9. In this case, the so-called "isolation" here refers to separation, which may not be sealed. Specifically, isolating the electrical cavity 11a from the collection cavity 11b by the second wall 11c allows the electrical cavity 11a for accommodating the battery cell 20 and the busbar component 12 to be separated from the collection cavity 11b for collecting emissions, which can minimize the mutual influence between the emissions and the components accommodated in the electrical cavity 11a. In this embodiment, the second wall 11c is an isolation component 116, then the isolation component 116 comprises the pressure relief region 114. In this way, the distance between the electrical cavity 11a and the collection cavity 11b can be reduced as much as possible, thereby saving space and increasing the space utilization rate of the box 11.

Optionally, the second wall 11c that serves as the isolation component 116 in embodiments of the present application may be a thermal management component for regulating the temperature for the battery cell 20. Specifically, this second wall 11c may be used to accommodate fluid to regulate the temperature for the battery cell 20. In the case of cooling down the battery cell 20, the isolation component 116 can accommodate a cooling medium to regulate the temperature of the battery cell 20. At this time, the isolation component 116 may also be called a thermal management component, a cooling component, a cooling system or a cooling plate. In addition, the isolation component 116 may also be used for heating, which is not limited in embodiments of the present application. Optionally, the fluid in the isolation component 116 may flow in a circulating manner to achieve a better effect of temperature regulation.

Optionally, the second wall that serves as the isolation component 116 in embodiments of the present application may also be a component for supporting the battery cell 20. Specifically, the isolation component 116 may be a support plate or beam for supporting or fixing the battery cell. For ease of illustration, embodiments of the present application mainly take the isolation component 116 serving as the second wall 11c as an example, but embodiments of the present application are not limited thereto, and the relevant descriptions are equally applicable to the case where the beam 113 serves as the second wall 11c, which will not be repeated herein for the sake of brevity.

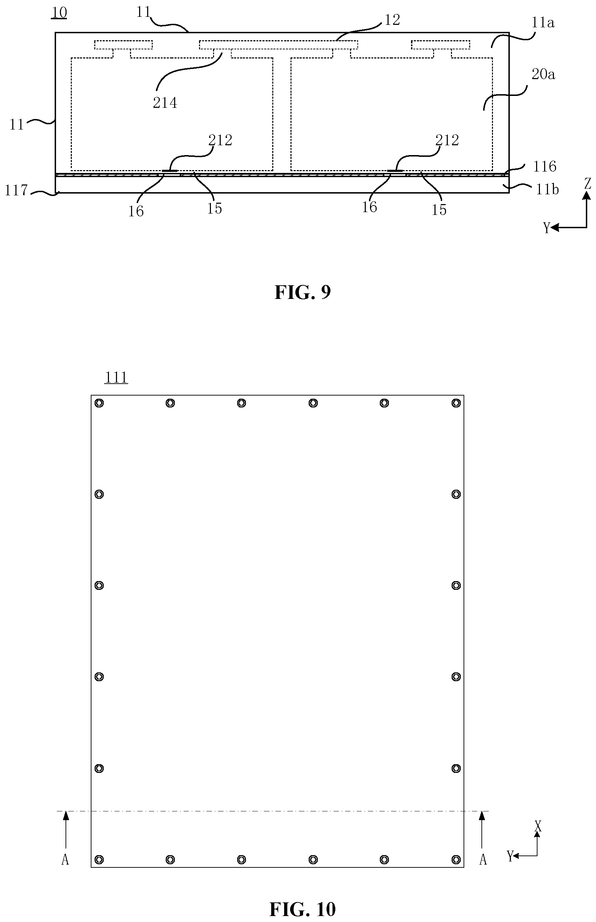

It should be understood that the isolation of the electrical cavity 11a from the collection cavity 11b by the second wall 11c in embodiments of the present application may be implemented in a variety of ways, which is not limited in embodiments of the present application. Taking Figs. 8 and 9 as an example, for the electrical cavity 11a, the box 11 may comprise a first enclosure having an opening, wherein the first enclosure may also be implemented in a variety of ways. For example, as shown in Figs. 8 to 9, the first enclosure may comprise a first portion 111 as well as a second portion 112 that has an opening on each of two opposite sides, wherein the first portion 111 and the second wall 11c cover the openings of the second portion 112, respectively, such that the wall for forming the electrical cavity 11a comprises the first enclosure and the second wall 11c; alternatively, unlike the implementation shown in Figs. 8 to 9, this first enclosure may also be of an integral structure with an opening at one end, while the second wall 11c covers the opening to form the electrical cavity 11a.

The box 11 may further comprise: a protective member 117 for forming the collection cavity 11b with the second wall 11c. The protective member 117 is used to protect the battery cell 20 or the isolation component 116, that is, the wall of this collection cavity 11b comprises the protective member 117 with the isolation component 116. With the above implementations, the collection cavity 11b can be formed by the second wall 11c and the protective member 117, such that the second wall 11c can be protected by the protective member 117. For example, during the use of the battery, the box 11 of the battery may be subjected to external forces, while by providing the protective member 117, it is possible to prevent the second wall 11c from being damaged under the external forces, and thus prevent the internal battery cells 20 from being damaged, thereby improving the structural stability and safety of the battery.

As a further example, unlike the above manner as shown in Figs. 8 to 9, the box 11 may also include a closed second enclosure, wherein the second enclosure may be used to form the electrical cavity 11a or, alternatively, by providing the isolation component 116 inside the second enclosure, the electrical cavity 11a may be isolated out from the interior of the second enclosure, and furthermore, the collection cavity 11b may also be isolated out. Here, this second enclosure may also be implemented in a variety of ways. As an example, the second enclosure may include a third portion and a fourth portion, wherein the fourth portion has an opening on one side to form a semi-closed structure and the isolation component 116 is disposed inside the fourth portion, and wherein the third portion caps the opening of the fourth portion to form the closed second enclosure.

For ease of description, embodiments of the present application will hereinafter mainly be illustrated with the formation of the collection cavity 11b in the manner shown in Figs. 8 to 9 as an example, but embodiments of the present application are not limited thereto.

Optionally, as shown in Fig. 8, the second balance valve 18 is disposed on the protective member 117 so that the emissions in the collection cavity 11b can be discharged as quickly as possible. When part of the collection cavity 11b is formed by the protective member 117, the emissions can be discharged by providing the second balance valve 18 on the protective member without affecting the original function and structure of the second wall 11c, such as a cooling function for the emissions.

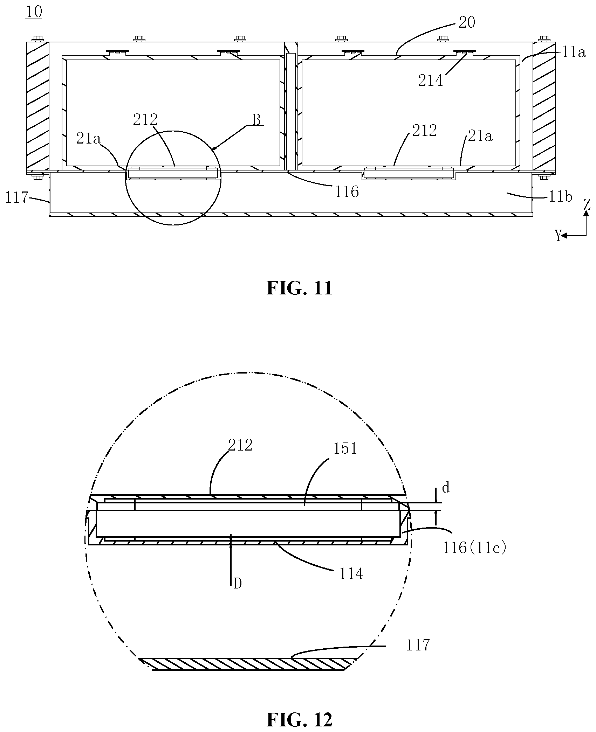

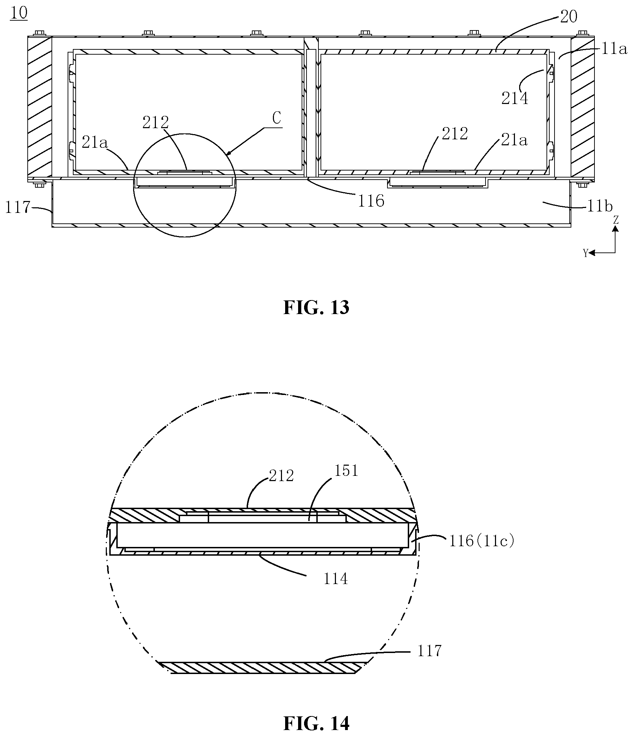

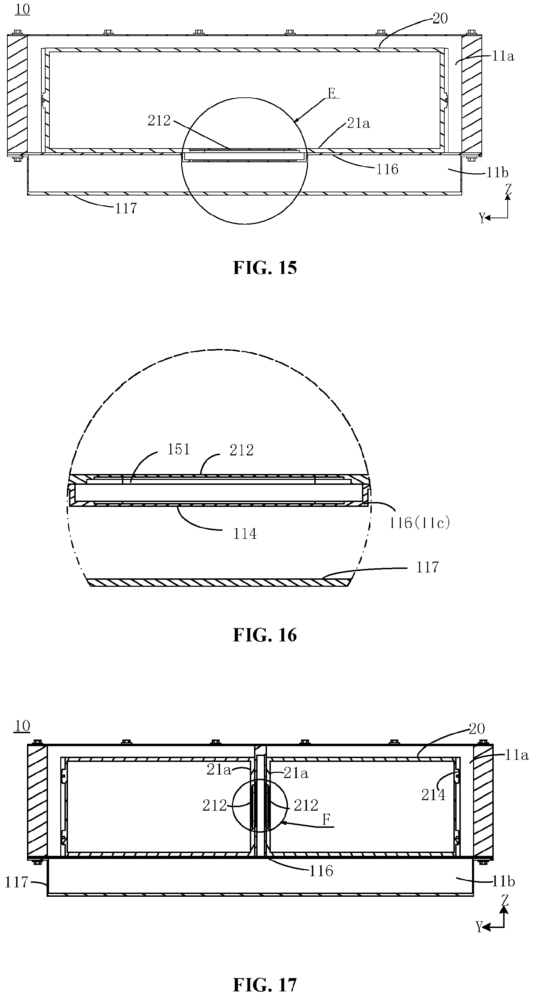

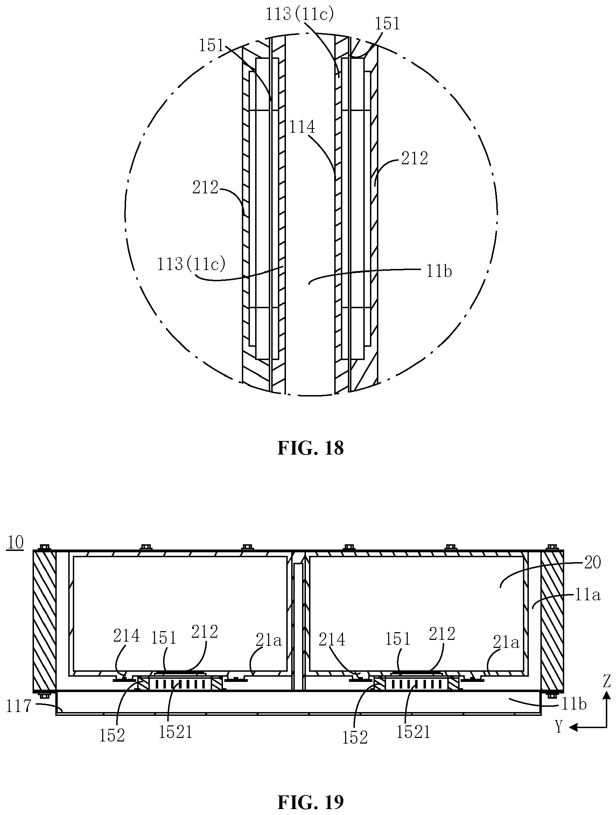

Fig. 10 is a top view of a battery 10 provided in another embodiment of the present application, on which a first portion 111 of the box and a cross section A-A are shown, Fig. 11 is a cross-sectional schematic diagram of the embodiment shown in Fig. 10 along the direction A-A, and Fig. 12 is a partial enlarged view at B in Fig. 11. In this embodiment, two electrode terminals 214 are both disposed on a wall of the battery cell 20 that is opposite to the first portion 111 of the box 11, and the electrode terminals 214 are disposed opposite to the pressure relief mechanism 212. Optionally, the relative positions between the electrode terminals 214 and the pressure relief mechanism 212 may also be implemented in a different way than that shown in Figs. 10 to 12. For example, Fig. 13 is a cross-sectional view of the Y-Z plane of a battery 10 provided in another embodiment of the present application, and Fig. 14 is a partial enlarged view at C in Fig. 13. In this embodiment, comparing Fig. 13 with Fig. 11, it can be seen that two electrode terminals 214 of the battery cell 20 in Fig. 13 are also disposed on the same wall, but unlike Fig. 11, the wall where the two electrode terminals 214 shown in Fig. 13 are disposed intersects with the first wall 21a where the pressure relief mechanism 212 is disposed. Fig. 15 is a cross-sectional view of the battery 10 provided in yet another embodiment of the present application in the Y-Z plane, and Fig. 16 is a partial enlarged view at E in Fig. 15, and comparing Fig. 15 and Fig. 11, it can be seen that the dimensions of the battery cell 20 described in Fig. 15 are different from the dimensions of the battery cell 20 shown in Fig. 11, such that the battery 10 in Fig. 11 comprises two groups of battery cells 20 arranged in a first direction X, whereas the battery 10 in Fig. 15 comprises only one group of battery cells 20 arranged in a first direction X, and thus the box 11 does not have the beam 113 as shown in Fig. 11 or in Fig. 13; furthermore, the two electrode terminals 214 of the battery cell 20 are disposed in different walls, for example, they may be disposed in two oppositely arranged walls of the battery cell 20, the two oppositely arranged walls intersecting with the first wall 21a of the battery cell 20. Fig. 17 is a cross-sectional view of a battery 10 provided in yet another embodiment of the present application in the Y-Z plane, and Fig. 18 is a partial enlarged view at F in Fig. 17, and comparing Fig. 17 and Fig. 11, it can be seen that the second wall 11c of Fig. 17 is a beam 113, wherein the beam 113 comprises the pressure relief region 114, the first wall 21a is a wall opposite to the beam 113, and the electrode terminal 214 is disposed on the wall of the battery cell 20 opposite to the first wall 21a. Specifically, in the embodiment shown in Figs. 17 and 18, the isolation component 116 and the protective member 117 may be used to form part of the collection cavity 11b, and the beam 113 is of a hollow structure, and the hollow structure of the beam 113 may also be used to form part of the collection cavity 11b, that is, the part of the collection cavity 11b formed by the isolation component 116 and the protective member 117 is in communication with the hollow structure of the beam 113, so that when the pressure relief mechanism 212 is provided towards this beam 113, that is, when the beam 113, as the second wall 11c, is provided facing the first wall 21a where the pressure relief mechanism 212 is disposed, emissions discharged through the pressure relief mechanism 212 can pass through the beam 113 into the collection cavity 11b.

The above embodiments are only illustrated by way of example of the first wall 21a in which the pressure relief mechanism 212 is disposed, the electrode terminals 214, and the second wall 11c in different implementations, while the first wall 21a in which the pressure relief mechanism 212 is disposed, the electrode terminals 214, and the second wall 11c may also have other implementations according to the actual structure and mounting method of the battery 10, which will not be repeated herein.

Optionally, when no isolation component is provided between the electrical cavity 11a and the collection cavity 11b, for example, as shown in Figs. 2 to 4 or as shown in Figs. 5 to 7, when the collection cavity 11b is a groove 115 opened in the second wall 11c, the opening of the groove 115 may serve as the pressure relief region 114. Unlike the approach in which the collection cavity 11d and the pressure relief region 114 are implemented by the groove 115, when the second wall 11c is used to isolate the electrical cavity 11a from the collection cavity 11b, the second wall 11c may be provided with the pressure relief region 114, wherein the pressure relief region 114 may be a weak region provided on the second wall 11c; or, as illustrated in Figs. 11 to 16, the second wall 11c may also be opened with a groove, wherein the groove is capable of accommodating deformation of the pressure relief mechanism 212 when the pressure relief mechanism 212 is actuated, and the bottom wall of the groove may be provided with a weak region. The weak region is intended to be capable of being broken when the pressure relief mechanism 212 is actuated, so as to cause emissions to pass through the weak region into the collection cavity 11b, the weak region having a minimum thickness of D. It is possible to cause the second wall 11c to be in a sealed state when the pressure relief mechanism 212 is not actuated, e.g., during normal use of the battery, which effectively protects the pressure relief mechanism 212 and prevents the pressure relief mechanism 212 from accidentally failing due to damage by external forces. When the pressure relief mechanism 212 is actuated, the weak region can be broken down to allow unobstructed and smooth discharge of emissions out of the electrical cavity 11a, while maintaining the other functions of the second wall 11c unaffected.

It should be understood that when the pressure relief region 114 is a weak region, the weak region may be configured in a variety of settings that facilitate breakage by emissions, which is not limited in embodiments of the present application, as illustrated below by way of example. For example, the pressure relief region 114 may be a region of small thickness on the second wall 11c, so that the pressure relief region 114 has a weak strength and thus forms a weak region. In addition to using a weak region of small thickness, it can also be possible to use a material with a low melting point to form a weak region that can be easily melted and broken by the emissions. That is, the weak region may have a lower melting point than the remainder of the second wall 11c. For example, the material used in the weak region has a melting point below 400°C.

Optionally, the pressure relief region 114 may also comprise a through hole penetrating through the second wall 11c, the through hole being used to enable the emissions to pass through the through hole into the collection cavity 11b when the pressure relief mechanism 212 is actuated. This penetration direction is perpendicular to the first wall 21a. For example, Figs. 8 to 9 take the pressure relief region 114 being a through hole penetrating through the second wall 11c as an example, where the direction of penetration is perpendicular to the first wall 21a, that is, the direction of penetration is the third direction Z. When the pressure relief region 114 is a through hole, on the one hand, it is easy to be machined, and on the other hand, it is possible to cause the emissions discharged out through the pressure relief mechanism 212 to enter directly into the collection cavity 11b through the through hole when the pressure relief mechanism 212 is actuated, thereby enabling the emissions to be discharged out of the electrical cavity 11a and enter into the collection cavity 11b more quickly, thus reducing the amount of emissions discharged into the electrical cavity 11a.

Optionally, the first balance valve 17 and the second balance valve 18 in embodiments of the present application satisfy:

$$0.1\text{mm} \leq \frac{(D+1)}{(P_2 \div P_1)} \leq 25\text{mm} \ (1)$$

wherein $P_1$ denotes an opening pressure of the first balance valve 17; $P_2$ denotes an opening pressure of the second balance valve 18; and D denotes a minimum thickness of the pressure relief region 114.

It should be understood that $P_1$ denotes the opening pressure of the first balance valve 17. For example, the opening pressure of this first balance valve 17 may be a first pressure, then the first balance valve 17 opens when the internal pressure of the electrical cavity 11a reaches said first pressure $P_1$. $P_2$ denotes the opening pressure of the second balance valve 18. For example, the opening pressure of the second balance valve 18 may be a second pressure, then the second balance valve 18 opens when the internal pressure of the collection cavity 11b reaches the second pressure $P_2$.

It should be understood that in the various embodiments shown above in Figs. 2 to 16, the pressure relief region 114 is implemented in a variety of ways, and the minimum thickness D is calculated in different ways for the pressure relief region 114 in different forms. For example, for the embodiments as shown in Figs. 2 to 4 or Figs. 5 to 7, the pressure relief region 114 is an opening of the groove 115, then the minimum thickness D is 0; as a further example, for the embodiments as shown in Figs. 8 to 18, when the pressure relief region 114 is a weak region provided on the second wall 11c, the minimum thickness D thereof is the smallest thickness among the thicknesses of different regions of the weak region, while when the pressure relief region 114 is a through hole, the minimum thickness D is 0.

It should be understood that in embodiments of the present application, in order to ensure the safety of the battery as much as possible, when designing various parameters of the battery, it is desired that the thermal runaway gases can enter the collection cavity 11b as much as possible and return to the electrical cavity 11a less, which means that, when the pressure relief region is provided with a weak region, the thickness of the weak region needs to be as thin as possible or the pressure relief region needs to be provided as a through hole. At the same time, if a large amount of emissions enter the collection cavity 11b and cannot be discharged in a timely manner, the emissions may return to the electrical cavity 11a, which affects the safety of the electrical cavity 11a. Therefore, in order to minimize the amount of emissions returning to the electrical cavity 11a, optionally, the opening pressure of the second balance valve 18 should be smaller than the opening pressure of the first balance valve 17. However, since, in addition to safety, various other influencing factors also need to be considered when designing the battery, which makes it not possible to ensure that the opening pressure of the second balance valve 18 is constantly greater than the opening pressure of the first balance valve 17, and the pressure relief region 114 also needs to be selected to be provided as a weak region or a through hole according to the actual situation, embodiments of the present application ensure as much as possible the safety of the electrical cavity 11a by controlling the range of the Formula (1).

When $\frac{(D+1)}{(P_2 \div P_1)}$ is too large, for example, exceeding the above limitation, the parameter $(D + 1)$ may be at a maximum value while $(P_2 \div P_1)$ may be at a minimum value, meaning that the opening pressure $P_2$ of the second balance valve 18 is relatively small while the opening pressure $P_1$ of the first balance valve 17 is relatively large. At this time, since the thickness of the pressure relief region 114 is large, so when thermal runaway occurs in the battery 10, it is difficult for emissions to break through the weak region 114 and enter the second pathway 16, and although the opening pressure $P_2$ of the second balance valve 18 is small, it is difficult for the emissions to be smoothly relieved through the second pathway 18, then the emissions discharged due to the thermal runaway are highly likely to return to this electrical cavity 11a, which means that more emissions enter the electrical cavity 11a while fewer emissions are discharged out of the electrical cavity 11a, which is not conducive to the collection of the emissions using the collection cavity 11b, but may instead affect the safety of the electrical cavity 11a, for example, by easily leading to short-circuiting of the busbar component 12. Therefore, in order to ensure that most of the emissions are discharged out of the electrical cavity 11a and can, for example, enter the collection cavity 11b, the parameter $\frac{(D+1)}{(P_2 \div P_1)}$ should not be set too large.

In contrast, when $\frac{(D+1)}{(P_2 \div P_1)}$ is too small, for example, exceeding the above limitation, the parameter $(D + 1)$ may be at a minimum value while $(P_2 \div P_1)$ may be at a maximum value, which means that the opening pressure of the second balance valve 18 is relatively large while the opening pressure of the first balance valve 17 is relatively small, so that when thermal runaway occurs in the battery, the emissions can easily enter into the second pathway 16, but since the opening pressure of the second balance valve 18 is large, it is difficult to open in time for pressure relief, then the emissions will accumulate in the second pathway 16 or the collection cavity, and thus easily return to the electrical cavity, and because the opening pressure of the first balance valve 17 is small, the first balance valve 17 may open too early, thus making it easier for the emissions to return to the electrical cavity 11a and affecting the safety of the electrical cavity 11a, and thus the parameter $\frac{(D+1)}{(P_2 \div P_1)}$ should not be set too small.

For example, the parameter $\frac{(D+1)}{(P_2 \div P_1)}$ of embodiments of the present application may be set to different values such as 0.1 mm, 0.18 mm, 0.2 mm, 0.25 mm, 0.36 mm, 0.5 mm, 1 mm, 3 mm, 5 mm, 8 mm, 10 mm, 13 mm, 15 mm, 18 mm, 20 mm, or 25 mm.

In the above Formula (1), the value range of the parameter D+1 can be set according to the actual application. For example, the value range of the parameter D+1 is: $1mm \le (D + 1) \le 2.5mm$; similarly, the value range of the parameter $P_2 \div P_1$ can be set according to the actual application. For example, the value range of the parameter $P_2 \div P_1$ is: $0.1 \le P_2 \div P_1 \le 10_{\circ}$. Here, the value ranges of the parameters $P_1$ and $P_2$ can be set to: $2KPa \le P_1 \le 80KPa$, and $2KPa \le P_2 \le 80KPa$, wherein both $P_1$ and $P_2$ are less than 80 KPa, which can reduce the probability that the sealing interface of the non-balance valve region is broken in the battery in embodiments of the present application; preferably, the value ranges of the parameters $P_1$ and $P_2$ are: $4KPa \le P_1 \le 40KPa$, and $4KPa \le P_2 \le 40KPa$.

Table 1 shows the experimental results of the pressure relief function of the battery of embodiments of the present application under different design parameters. Among them, Embodiments 1-9 are experimental results when the parameter $\frac{(D+1)}{(P_2 \div P_1)}$ is within the value range of Formula (1), Comparative Embodiments 1-3 are experimental results when the value of the parameter $\frac{(D+1)}{(P_2 \div P_1)}$ is less than the minimum value of Formula (1), and Comparative Embodiments 4-6 are experimental results when the value of the parameter $\frac{(D+1)}{(P_2 \div P_1)}$ is greater than the maximum value of Formula (1), and under all the conditions of Embodiments 1-9, the pressure relief function of the battery 10 is normal, wherein the pressure relief function being normal means that at least one of the first balance valve 17 and the second balance valve 18 can open normally for pressure relief, and no other damage to the structure or sealing surface occurs. In contrast, under the conditions of Comparative Embodiments 1-6, the pressure relief function of the battery 10 is abnormal, wherein the pressure relief function being abnormal means that the battery 10 undergoes a situation of damage to the structure or sealing surface other than the first balance valve 17 and the second balance valve 18.

Table 1

| | D+1 | $P_2 \div P_1$ | $\dfrac{(D+1)}{(P_2 \div P_1)}$ | Pressure relief function |
|---|---|---|---|---|
| Embodiment 1 | 1 | 10 | 0.1 | Normal |
| Embodiment 2 | 1 | 5 | 0.2 | Normal |
| Embodiment 3 | 1 | 0.1 | 10 | Normal |
| Embodiment 4 | 1.8 | 10 | 0.18 | Normal |
| Embodiment 5 | 1.8 | 5 | 0.36 | Normal |
| Embodiment 6 | 1.8 | 0.1 | 18 | Normal |
| Embodiment 7 | 2.5 | 10 | 0.25 | Normal |
| Embodiment 8 | 2.5 | 5 | 0.5 | Normal |
| Embodiment 9 | 2.5 | 0.1 | 25 | Normal |
| Comparative Embodiment 1 | 1 | 15 | 0.07 | Abnormal |
| Comparative Embodiment 2 | 1 | 20 | 0.05 | Abnormal |
| Comparative Embodiment 3 | 1 | 25 | 0.04 | Abnormal |
| Comparative Embodiment 4 | 2.5 | 0.08 | 31.25 | Abnormal |
| Comparative Embodiment 5 | 2.5 | 0.06 | 41.67 | Abnormal |
| Comparative Embodiment 6 | 2.5 | 0.04 | 62.5 | Abnormal |

Optionally, the first balance valve 17 and the second balance valve 18 in embodiments of the present application satisfy:

$$0.1\text{mm} \leq \frac{(d+1)}{(P_2 \div P_1)} \leq 30\text{mm} \ (2)$$

In the above formula, P1 denotes an opening pressure of the first balance valve 17; P2 denotes an opening pressure of the second balance valve 18; and d denotes a minimum distance between a surface of the second wall 11c facing the battery cell 20 and the first wall 21a.

It should be understood that in the various embodiments as shown above in Figs. 2 to 16, the second wall 11c and the first wall 21a are implemented in a variety of ways, and for different second walls 11c and first walls 21a, the minimum distance between the two is calculated in different ways. For example, in the embodiments shown in Figs. 2 to 4 or Figs. 3 to 5, d is the minimum distance between the plane in which the opening of the groove 115 is located and the first wall 21a, and in several embodiments shown in Figs. 8 to 16, d is the minimum distance between the plane of the isolation component that faces the battery cell 20 and the first wall 21a; while in the embodiments shown in Figs. 17 to 18, d is the minimum distance between the plane of the beam 113 that faces the battery cell 20 and the first wall 21a.

It should be understood that in embodiments of the present application, it is necessary to reasonably control the structural parameters of the first pathway 15 and to ensure that the first balance valve 17 can open in time for pressure relief when there are emissions returning to the electrical cavity 11a; therefore, embodiments of the present application ensure as much as possible the safety of the electrical cavity 11a by controlling the range of Formula (2).

When the parameter $\frac{(d+1)}{(P_2 \div P_1)}$ is too large, for example, exceeding the above limitation, the parameter $(d+1)$ may be at a maximum value while the parameter $(P_2 \div P_1)$ is at a minimum value, meaning that the opening pressure of the second balance valve 18 is relatively small while the opening pressure of the first balance valve 17 is relatively large. At this time, due to the large dimensions of the pathway of the pressure relief mechanism 212 to the electrical cavity, the emissions can easily return to the electrical cavity, but the first balance valve 17 has a large opening pressure and is thus difficult to open in time for pressure relief, which is likely to result in the accumulation of the emissions in the electrical cavity 11a, thus affecting the safety of the electrical cavity 11a, and rendering the second balance valve 18 unable to realize the effect of pressure relief to the fullest extent.

In contrast, when $\dfrac{(d+1)}{(P_2 \div P_1)}$ is too small, for example, exceeding the above limitation, the parameter $(d+1)$ may be at a minimum value while the parameter $(P_2 \div P_1)$ may be at a maximum value, meaning that the opening pressure of the second balance valve 18 is relatively large while the opening pressure of the first balance valve 17 is relatively small. At this time, the emissions can easily enter the second pathway 16, but because the second balance valve 18 cannot open in time to complete the pressure relief, and because the dimensions of the pathway of the pressure relief mechanism 212 to the electrical cavity 11a are small, it is also not easy for the emissions to enter the electrical cavity 11a through the first pathway 15 to complete the pressure relief through the electrical cavity 11a; therefore, when the parameter $\dfrac{(d+1)}{(P_2 \div P_1)}$ is too small, the emissions can easily be accumulated in the second pathway 16 or the collection cavity 11b, which leads to the failure of the sealing interface of the box 11 of the battery 10, thereby compromising the safety of the battery.

For example, the parameter $\dfrac{(d+1)}{(P_2 \div P_1)}$ of embodiments of the present application may be set to different values such as 0.1 mm, 0.2 mm, 0.24 mm, 0.3 mm, 0.4 mm, 0.6 mm, 1 mm, 5 mm, 10 mm, 15 mm, 20 mm, 25 mm or 30 mm. Among them, the value range of the parameter $(d+1)$ is: $1\,\text{mm} \leq (d+1) \leq 3.0\,\text{mm}$. The rest of the parameters in Formula (2) can be set with reference to the value ranges of the parameters in Formula (1).

Table 2 shows the experimental results of the pressure relief function of the battery of embodiments of the present application under different design parameters. Among them, Embodiments 1-9 are experimental results when the parameter $\dfrac{(d+1)}{(P_2 \div P_1)}$ is within the value range of Formula (2), Comparative Embodiments 1-3 are experimental results when the value of the parameter $\dfrac{(d+1)}{(P_2 \div P_1)}$ is less than the minimum value of Formula (2), and Comparative Embodiments 4-6 are experimental results when the value of the parameter $\dfrac{(d+1)}{(P_2 \div P_1)}$ is greater than the maximum value of Formula (2), and under all the conditions of Embodiments 1-9, the pressure relief function of the battery 10 is normal, wherein the pressure relief function being normal means that at least one of the first balance valve 17 and the second balance valve 18 can open normally for pressure relief, and no other damage to the structure or sealing surface occurs. In contrast, under the conditions of Comparative Embodiments 1-6, the pressure relief function of the battery 10 is abnormal, wherein the pressure relief function being abnormal means that the battery 10 undergoes a situation of damage to the structure or sealing surface other than the first balance valve 17 and the second balance valve 18.

Table 2

| | $(d+1)$ | $(P_2 \div P_1)$ | $\dfrac{(d+1)}{(P_2 \div P_1)}$ | Pressure relief function |
|---|---|---|---|---|
| Embodiment 1 | 1 | 10 | 0.1 | Normal |
| Embodiment 2 | 1 | 5 | 0.2 | Normal |
| Embodiment 3 | 1 | 0.1 | 10 | Normal |
| Embodiment 4 | 2 | 10 | 0.2 | Normal |
| Embodiment 5 | 2 | 5 | 0.4 | Normal |
| Embodiment 6 | 2 | 0.1 | 20 | Normal |
| Embodiment 7 | 3 | 10 | 0.3 | Normal |
| Embodiment 8 | 3 | 5 | 0.6 | Normal |
| Embodiment 9 | 3 | 0.1 | 30 | Normal |
| Comparative Embodiment 1 | 1 | 15 | 0.07 | Abnormal |
| Comparative Embodiment 2 | 1 | 20 | 0.05 | Abnormal |
| Comparative Embodiment 3 | 1 | 25 | 0.04 | Abnormal |
| Comparative Embodiment 4 | 3 | 0.08 | 37.5 | Abnormal |
| Comparative Embodiment 5 | 3 | 0.06 | 50 | Abnormal |

(continued)

| | $(d + 1)$ | $(P_2 \div P_1)$ | $\dfrac{(d + 1)}{(P_2 \div P_1)}$ | Pressure relief function |
|---|---|---|---|---|
| Comparative Embodiment 6 | 3 | 0.04 | 75 | Abnormal |

For the battery 10 of embodiments of the present application, by reasonably adjusting the various parameters described above, it is possible to adjust the dimensional relationship between the first pathway 15 and the second pathway 16, and thereby adjust the proportion of the emissions entering the electrical cavity 11a. For example, it is possible to cause a smaller part of the emissions discharged through the pressure relief mechanism 212 to enter the electrical cavity 11a, while a large part of the emissions can be discharged out of the electrical cavity 11a. In this way, it is possible to alleviate the burden of discharging emissions out of the electrical cavity 11a, which reduces the requirement for the sealing of the electrical cavity 11a and also reduces the requirement for the second pathway 16; and at the same time, it is also possible to ensure as much as possible the safety of the electrical cavity 11a, and prevent a large amount of emissions from entering the electrical cavity 11a and affecting the busbar component 12 or the like and thus causing short-circuiting, thereby improving the safety of the battery 10.

Optionally, the battery 10 of embodiments of the present application at least comprises one first balance valve 17 and one second balance valve 18. The numbers of the first balance valves 17 and of the second balance valves 18 may be set to one or a plurality according to the actual structure of the battery 10. For example, in the embodiment shown in Fig. 3, the battery 10 comprises two first balance valves 17 and two second balance valves 18. The present application does not limit the numbers of first balance valves 17 and of second balance valves 18.

Optionally, the battery 10 of embodiments of the present application comprises at least one first balance valve 17 and at least one second balance valve 18, and the first balance valve 17 and the second balance valve 18 satisfy:

$$0.017 \leq \frac{(S_1 \div S_2)}{(P_2 \div P_1)} \leq 60 \ (3)$$

wherein $S_1$ denotes the total pressure relief area of all of the first balance valves 17 included in the battery 10, i.e., the sum of the flowing areas through which all of the first balance valves 17 can allow emissions to pass after opening; $S_2$ denotes the total pressure relief area of all of the second balance valves 18 included in the battery, i.e., the sum of the flowing areas through which all of the second balance valves 18 can allow emissions to pass after opening; P1 denotes the opening pressure of the first balance valve; and P2 denotes the opening pressure of the second balance valve.

It should be understood that when the parameter $\frac{(S_1 \div S_2)}{(P_2 \div P_1)}$ is too large, for example, exceeding the above limitation, then the parameter $(S_1 \div S_2)$ may be at a maximum value, which means that the pressure relief area of the first balance valve 17 may be at a maximum value, while the pressure relief area of the second balance valve 18 is at a minimum value, and the parameter $(P_2 \div P_1)$ is at a minimum value, then the valve opening pressure of the second balance valve 18 may be at a minimum value, while the valve opening pressure of the first balance valve 17 may be at a maximum value, so that the second balance valve 18 has a small valve opening pressure, and thus may be opened in time to discharge the emissions from the box 11, but the pressure relief area of the second balance valve 18 is too small, which can easily result in the emissions being discharged from the box 11 at a small speed, thus resulting in the failure to realize a good pressure relief effect even if the second balance valve 18 can be opened in time. Moreover, although the pressure relief area of the first balance valve 17 is large, the valve opening pressure of the first balance valve 17 is too large, so that the emissions cannot be discharged out of the box in a timely manner through the first balance valve 17, meaning that they can easily cause accumulations of the emissions in the electrical cavity 11a, thus compromising the safety of the electrical cavity 11a.

When the parameter $\frac{(S_1 \div S_2)}{(P_2 \div P_1)}$ is too small, for example, exceeding the above limitation, then the parameter $(S_1 \div S_2)$ may be at a minimum value, for example, the pressure relief area of the first balance valve 17 is at a minimum value and the pressure relief area of the second balance valve 18 is at a maximum value; and the parameter $(P_2 \div P_1)$ may be at a maximum value, for example, the valve opening pressure of the second balance valve 18 is at a maximum value and the valve opening pressure of the first balance valve 17 is at a minimum value. At this time, it is extremely easy to open the first balance valve 17, making it easy for the emissions to be discharged to the electrical cavity through the first pathway 15, but due to the small pressure relief area of the first balance valve 17, the emissions can easily be accumulated in the electrical cavity 11a, which influences the safety of the electrical cavity 11a; and at the same time, although the second balance valve 18 has a sufficient pressure relief area, since the opening pressure of the second balance valve 18 is too large, the emissions are difficult to be discharged to the outside of the box 11 through the second balance valve 18, which can lead to the subsequent accumulation in the collection cavity 11b, and can also easily lead to an increase in the amount of emissions that flow back into the electrical cavity 11a, thereby compromising the safety of the electrical cavity 11a.

For example, the parameter $\dfrac{(S_1 \div S_2)}{(P_2 \div P_1)}$ of embodiments of the present application may be set to different values such as 0.017, 0.034, 0.05, 0.1, 0.3, 0.6, 1, 1.2, 1.5, 1.7, 5, 10, 15, 20, 24, 30, 38, 40, 45, 50, 55, or 60, wherein the value range of the parameter $(S_1 \div S_2)$ is: $0.17 \leq S_1 \div S_2 \leq 6$. The value range of the parameter $S_1$ is: $300mm^2 \leq S_1 \leq 3000mm^2$, ; the value range of the parameter $S_2$ is: $300mm^2 \leq S_2 \leq 3000mm^2$, ; preferably, the value range of the parameter $S_1$ is: $400mm^2 \leq S_1 \leq 2400mm^2$; and the value range of the parameter $S_2$ is: $400mm^2 \leq S_2 \leq 2400mm^2$. The rest of the parameters in Formula (3) can be set with reference to the value ranges in Formula (1). Optionally, the units of the parameters $S_1$ and $S_2$ in Formula (3) may also be other units than $mm^2$, and the units of $P_1$ and $P_2$ may also be other units than KPa, as long as it is ensured that the units of the parameters $S_1$ and $S_2$ are the same, and the units of $P_1$ and $P_2$ are the same.

With the above implementations, by controlling the relationship between the opening pressure and the pressure relief area of the first balance valve 17 and the second balance valve 18, it is possible to enable emissions to be discharged from the box 11 in a timely manner after either entering the electrical cavity 11a or being discharged from the electrical cavity 11a.

Table 3 shows the experimental results of the pressure relief function of the battery 10 of embodiments of the present application under different design parameters. Among them, Embodiments 1-9 are experimental results when the parameter $\dfrac{(S_1 \div S_2)}{(P_2 \div P_1)}$ is within the value range of Formula (3), Comparative Embodiments 1-3 are experimental results when the value of the parameter $\dfrac{(S_1 \div S_2)}{(P_2 \div P_1)}$ is less than the minimum value of Formula (3), and Comparative Embodiments 4-6 are experimental results when the value of the parameter $\dfrac{(S_1 \div S_2)}{(P_2 \div P_1)}$ is greater than the maximum value of Formula (3), and under all the conditions of Embodiments 1-9, the pressure relief function of the battery 10 is normal, wherein the pressure relief function being normal means that at least one of the first balance valve 17 and the second balance valve 18 can open normally for pressure relief, and no other damage to the structure or sealing surface occurs. In contrast, under the conditions of Comparative Embodiments 1-6, the pressure relief function of the battery 10 is abnormal, wherein the pressure relief function being abnormal means that the battery 10 undergoes a situation of damage to the structure or sealing surface other than the first balance valve 17 and the second balance valve 18.

Table 3

| | $(S_1 \div S_2)$ | $(P_2 \div P_1)$ | $\dfrac{(S_1 \div S_2)}{(P_2 \div P_1)}$ | Pressure relief function |
|---|---|---|---|---|
| Embodiment 1 | 0.17 | 10 | 0.017 | Normal |
| Embodiment 2 | 0.17 | 5 | 0.034 | Normal |
| Embodiment 3 | 0.17 | 0.1 | 1.7 | Normal |
| Embodiment 4 | 3 | 10 | 0.3 | Normal |
| Embodiment 5 | 3 | 5 | 0.6 | Normal |
| Embodiment 6 | 3 | 0.1 | 30 | Normal |
| Embodiment 7 | 6 | 10 | 0.6 | Normal |
| Embodiment 8 | 6 | 5 | 1.2 | Normal |
| Embodiment 9 | 6 | 0.1 | 60 | Normal |
| Comparative Embodiment 1 | 0.17 | 15 | 0.011 | Abnormal |
| Comparative Embodiment 2 | 0.17 | 20 | 0.009 | Abnormal |
| Comparative Embodiment 3 | 0.17 | 25 | 0.007 | Abnormal |
| Comparative Embodiment 4 | 6 | 0.08 | 75 | Abnormal |
| Comparative Embodiment 5 | 6 | 0.06 | 100 | Abnormal |

(continued)

|  | $(S_1 \div S_2)$ | $(P_2 \div P_1)$ | $\dfrac{(S_1 \div S_2)}{(P_2 \div P_1)}$ | Pressure relief function |
|---|---|---|---|---|
| Comparative Embodiment 6 | 6 | 0.04 | 150 | Abnormal |

Optionally, in the various embodiments shown in Figs. 12 to 18, a first gap 151 is provided between a surface of the second wall 11c facing the battery cell 20 and the first wall 21a, and the first pathway 15 comprises the first gap 151. By implementing part of the first pathway 15 with the first gap 151, on the one hand, it is easy to implement, and as no additional other components need to be added, space can be saved; and on the other hand, the provision of the first gap 151 between the first wall 21a and the second wall 11c can reduce the sealing requirement for the electrical cavity 11a, and in particular, the sealing requirement for the second wall 11c can be reduced, which can reduce the difficulty of machining of the battery 10, thereby improving the machining efficiency of the battery 10.

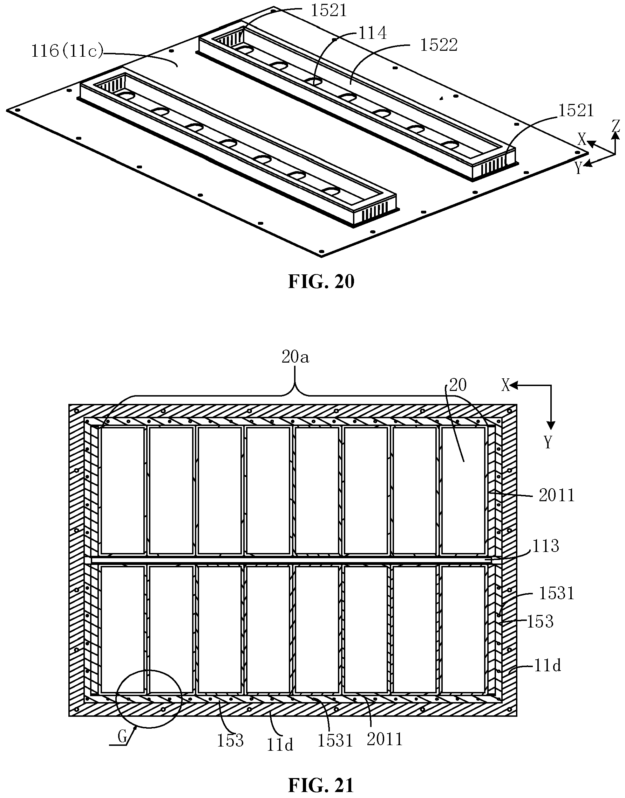

Fig. 19 illustrates a cross-sectional schematic diagram of a battery disclosed in another embodiment of the present application, and Fig. 20 illustrates a schematic structural diagram of a connection structure 152 disclosed in the embodiment shown in Fig. 19. In the embodiment as shown in Figs. 19 to 20, the battery 10 further comprises: a connection structure 152, the connection structure 152 being provided between the first wall 21a and the second wall 11c, and the connection structure 152 being used to form part of the first pathway 15. At least part of the first pathway 15 is implemented by the connection structure 152. On the one hand, this can improve the structural stability between the first wall 21a and the second wall 11c, especially when no thermal runaway occurs in the battery cell 20, the relative fixation between the first wall 21a and the second wall 11c can be implemented through this connection structure 152, or the sealing between the first wall 21a and the second wall 11c can also be realized; and on the other hand, by reasonably arranging the specific form and position of the connection structure 152, the position of the first pathway 15 can be adjusted, and the directional discharge of the emissions passing through the first pathway 15 can thus be realized, thereby improving the safety of the battery 10.

In embodiments of the present application, the connection structure 152 can implement at least part of the first pathway 15 in a variety of ways. For example, the connection structure 152 of embodiments of the present application is provided with a first flow channel 1521, and the first pathway 15 comprises the first flow channel 1521. The emissions discharged through the pressure relief mechanism 212 can be discharged to the electrical cavity 11a through the first flow channel 1521, so that by reasonably arranging the position of this first flow channel 1521, directional discharge of the emissions can be realized, which reduces the influence of the emissions on components inside the electrical cavity 11a, thereby improving the safety of the battery 10.

In some embodiments, the connection structure 152 is provided with a plurality of first flow channels 1521 extending along at least one direction, the at least one direction being parallel to the first wall 21a, which means that a plurality of first flow channels 1521 extending along one or more directions are provided on a surface of the connection structure 152 that has a large area. Providing a plurality of first flow channels 1521 can spread out the discharge direction of the emissions to avoid damage to components in a single direction when the high-temperature emissions are discharged in that direction.

It should be understood that the direction of extension of the first flow channel 1521 of embodiments of the present application may be set according to the actual application. For example, the direction of extension of the first flow channel 1521 may be reasonably arranged according to the positional relationship between the electrode terminals 214 of the battery cell 20 and the pressure relief mechanism 212, so as to avoid the influence of emissions on the electrode terminals 214 and the busbar component 12 connected to the electrode terminals 214.

In some embodiments, the electrode terminals 214 are not disposed on the same wall as the pressure relief mechanism 212, and the wall on which the electrode terminals 214 are disposed does not intersect with the first wall 21a. For example, when the wall on which the electrode terminals 214 are disposed is disposed opposite to the first wall 21a, the direction of extension of the first flow channel 1521 may be unrestricted. For example, the connection structure 152 may be provided with one or more X-direction first flow channels extending along the first direction X; for another example, the connection structure 152 may be provided with one or more X-direction first flow channels extending along the second direction Y, wherein the first direction X and the second direction Y are perpendicular to each other; or the connection structure 152 may also comprise first flow channels 1521 in other directions, and embodiments of the present application are not limited thereto.

Optionally, as shown in Figs. 19 to 20, the electrode terminals 214 and the pressure relief mechanism 212 may also be disposed on the same wall, at which point the connection structure 152 may comprise a plurality of first flow channels 1521 extending along at least one direction, for example, the connection structure 152 may comprise a plurality of first flow channels 1521 extending along the third direction Z. Specifically, a plurality of first flow channels 1521 of the connection structure 152 may be disposed on a sidewall of the connection structure 152 that is perpendicular to the first direction X. For example, the first flow channel 1521 may be a narrow slit on the sidewall of the connection structure 152 for discharging a small part of the emissions into the electrical cavity 11a and avoiding, as much as possible, the influence of such emissions on the busbar component 12.

In some embodiments, unlike Figs. 19 and 20, the electrode terminals 214 may also be provided on a wall of the battery cell 20 that intersects with the first wall 21a, then the at least one direction comprises a direction that is parallel to the wall on which the electrode terminals 214 are disposed, so as to avoid the flowing of emissions through the first flow channel 1521 to the electrode terminals 214, thereby avoiding the influence of the emissions on the electrode terminals 214. For example, short circuits between different busbar components 12 connecting the electrode terminals 214 caused by metallic debris in the emissions can be avoided, thereby improving the safety of the battery 10.

It should be understood that the connection structure 152 of embodiments of the present application comprises a thermally conductive pad and/or a sealing gasket provided between the first wall 21a and the second wall 11c. Specifically, the connection structure 152 comprises a thermally conductive pad provided between the first wall 21a and the second wall 11c, through which heat dissipation for the battery cell 20 can be performed during use of the battery 10. For example, when this second wall 11c is a thermal management component, then the heat from the battery cell 20 can be transferred to the thermal management component via the thermally conductive pad, so as to adjust the temperature of the battery cell 20 in a timely manner to ensure the normal use of the battery cell 20. For example, as shown in Figs. 19 and 20, the connection structure 152 may comprise a thermally conductive pad, which may be a portion provided with a plurality of Y-direction first flow channels extending along the second direction Y in the figure.

In addition, when the connection structure 152 comprises a sealing gasket, the sealing performance between the first wall 21a and the second wall 11c can be improved. For example, the connection structure 152 may comprise a sealing gasket, which may be a portion provided with a plurality of X-direction first flow channels extending along the first direction X in the figure. The sealing gasket may be provided on the edge of at least one side of the thermally conductive pad, for example, the sealing gasket may be separately provided on the edges of opposite sides of the thermally conductive pad to improve the sealing performance between the first wall 21a and the second wall 11c.

It should be understood that when the connection structure 152 of embodiments of the present application comprises both a sealing gasket and a thermally conductive pad, the distance between the sealing gasket and the thermally conductive pad is less than or equal to 2 mm so that the gap between the sealing gasket and the thermally conductive pad can be used as a first flow channel 1521 to direct the discharge of emissions.

The material of the thermally conductive pad and the material of the sealing gasket in embodiments of the present application may be selected according to the actual application. For example, the material of the thermally conductive pad may include a thermally conductive silicone. As a further example, the material of the sealing gasket comprises at least one of the following: silicone rubber, polypropylene (PP), polyfluoroalkoxy (PFA), and polyimide (PI).

In embodiments of the present application, the connection structure 152 may also form at least part of the first pathway 15 in other ways. For example, the connection structure 152 is configured to be broken when the pressure relief mechanism 212 is actuated, so as to form a gap between the first wall 21a and the second wall 11c, which is included in the first pathway 15. In this way, by reasonably selecting the material of the connection structure 152, the connection structure 152 can be broken when the pressure relief mechanism 212 is actuated, thereby forming a gap without additional machining of the connection structure 152, which is simpler and can also ensure the sealing of the battery cell 20 during normal use.

Specifically, the connection structure 152 being broken in embodiments of the present application may comprise: at least part of the connection structure 152 being broken. For example, when the pressure relief mechanism 212 is actuated, the connection structure 152 may only be externally broken, so that some internal components of the connection structure 152 that are exposed will not be broken; or the internal structure of the connection structure 152 is broken, for example, the connection structure 152 may be a multi-layer structure and some of the structural layers in the multi-layer structure are broken; or the connection structure 152 may be broken in its entirety, and embodiments of the present application are not limited thereto.

It should be understood that the connection structure 152 of embodiments of the present application can be broken when the pressure relief mechanism 212 is actuated, which can be implemented in a variety of ways. For example, the connection structure 152 may comprise a region of low structural strength so that the connection structure 152 is broken by the impact force of emissions on the connection structure 152 when the pressure relief mechanism 212 is actuated.

As a further example, the connection structure 152 comprises a melting layer provided between the first wall 21a and the second wall 11c, the melting layer being used to be melted when the pressure relief mechanism 212 is actuated so as to form a gap between the first wall 21a and the second wall 11c. Since the emissions discharged through the pressure relief mechanism 212 are high-temperature emissions, the melting layer provided can be melted when thermal runaway occurs in the battery cell 20 so as to form a gap, and cannot be easily broken during normal use of the battery cell 20, which can ensure the safety and stability of the battery 10.

Optionally, the thickness of the melting layer may be set according to the actual application. For example, the thickness of the melting layer is 0.5 mm to 3 mm, i.e., the thickness of the melting layer is usually greater than or equal to 0.5 mm, so as to avoid a situation in which, when the thickness is too small, the gap formed after the melting layer is melted is too small, or even an effective gap cannot be formed, and thus it is possible to avoid obstructing the discharge of emissions due to the fact that the first pathway 15 is too small; in addition, the thickness of the melting layer is usually less than or equal to 3 mm to avoid a situation where when the thickness of the melting layer is too large, the melted portion is too large, meaning that the gap formed is too large, which would result in a large amount of emissions being discharged to the electrical cavity 11a through the gap, and is very likely to cause extensive damage to the electrical cavity 11a, and in particular may result in short-circuiting of different busbar components 12, thus affecting the safety of the battery 10.

It should be understood that the connection structure 152 of embodiments of the present application may be a multi-layer structure along the thickness direction, wherein the melting layer may be located in any of the layers of the multi-layer structure. For example, the melting layer may comprise a binder for fixation. For example, the connection structure 15 may comprise a thermally conductive pad which may be fixed to the first wall 21a of the battery cell 20 by means of a binder, and the binder may be broken to form a gap when the pressure relief mechanism 212 is actuated.

Optionally, the material of the binder of embodiments of the present application may be set according to the actual application. For example, the material of the binder comprises at least one of the following: an epoxy-type structural adhesive, an acrylate structural adhesive, a polyimide structural adhesive, a maleimide structural adhesive, a urethane structural adhesive, and a subglue. As a further example, the material of the binder comprises a polymer adhesive and a thermally conductive material, wherein the material of the polymer adhesive comprises at least one of an epoxy resin, an organosilicone, and a polyimide, and the thermally conductive material comprises at least one of an $Al_2O_3$, a ZnO, a BeO, an AIN, a $Si_3N_4$, a BN, a SiC, a $B_4C$, a carbon nanotube, and a graphite nanosheets, and embodiments of the present application are not limited thereto.

It should be understood that the aforementioned approach in which the connection structure 152 has a first flow channel 1521 to form at least part of the first pathway 15, as well as the approach in which the connection structure 152 is broken to form the first pathway when the pressure relief mechanism 212 is actuated, can be used independently of each other or in combination with each other, which is not limited in embodiments of the present application. For example, as shown in Figs. 19 to 20, the connection structure 152 is provided with a first flow channel 1521, and also the connection structure 152 may comprise a melting layer so that at least part of the melting layer is melted to form a gap when the pressure relief mechanism 212 is actuated.

In embodiments of the present application, as shown in Fig. 20, the connection structure 152 is provided with an avoidance region 1522 corresponding to the pressure relief mechanism 212, and the avoidance region 1522 is used to provide a deformation space for the pressure relief mechanism 212 when it is actuated, so as to avoid untimely actuation of the pressure relief mechanism 212 caused by the connection structure 152 blocking the pressure relief mechanism 212, so that the emissions can be quickly discharged through the pressure relief mechanism 212.

It should be understood that this avoidance region 1522 located in the connection structure 152 may be used to provide deformation space for the pressure relief mechanism 212 so that emissions that pass through the pressure relief mechanism 212, after being discharged out of the battery cell 20, will flow out through the avoidance region 1522; therefore, this avoidance region 1522 may be viewed as at least part of the first pathway 15 and the emissions may be discharged through this avoidance region 1522 to the electrical cavity 11a.

As shown in Fig. 20, the avoidance region 1522 corresponds to at least two pressure relief mechanisms 212, and considering that a plurality of battery cells 20 within the battery 10 are usually arranged in a certain order, the avoidance region 1522 may correspond to a plurality of pressure relief mechanisms 212 at the same time to facilitate machining. For example, the avoidance region 1522 provided in the connection structure 152 may be an opening region, which may correspond to a row of battery cells 20, but embodiments of the present application are not limited thereto.

It should be understood that, optionally, in embodiments of the present application, the pressure relief mechanism 212 for the battery cell 20 and the electrode terminals 214 may be located on different walls of the battery cell 20, as shown in Figs. 2 through 18; and the pressure relief mechanism 212 and the electrode terminals 214 may also be located on the same wall of the battery cell 20, as shown in Figs. 19 to 20, which is not limited in the present application. In addition, the embodiment shown in Figs. 19 to 20 is illustrated with the connection structure 152 being a hollow structure as an example, but the relevant description can be equally applicable to a solid structure, which is not limited by the embodiments of the present application.

It should be understood that the material of the connection structure 152 of embodiments of the present application may be set according to the actual application. For example, the material of the connection structure 152 comprises at least one of aluminum, steel, rigid plastic, ceramic material, and mica to ensure the strength of the connection structure 152 so that when the pressure relief mechanism 212 is actuated, the connection structure 152 is capable of resisting the impact of emissions without being extensively broken, thereby avoiding the influence of the emissions on the busbar component 12.

In embodiments of the present application, since the connection structure 152 usually selects a material with greater connection strength, a compressible foam may also be provided between the connection structure 152 and the battery cell 20, which may be used to realize the fixation between the connection structure 152 and the battery cell 20 on the one hand, and absorb the assembly tolerance between the connection structure 152 and the battery cell 20 on the other hand.

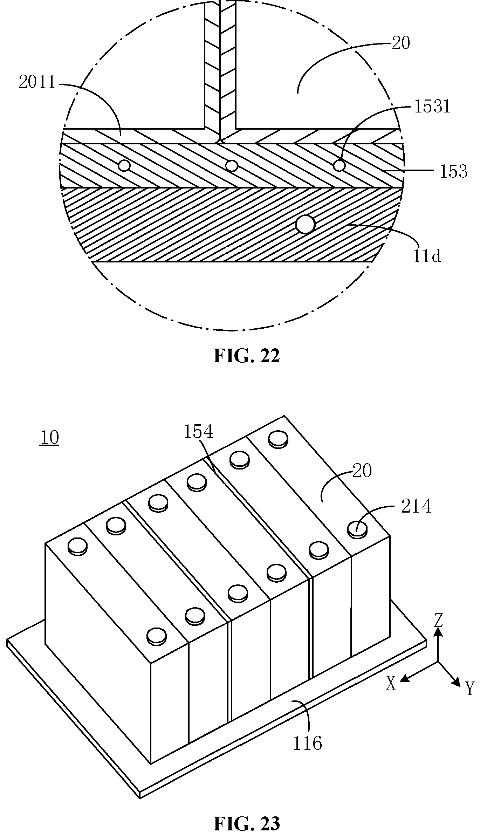

Fig. 21 illustrates a cross-sectional schematic diagram of the X-Y plane of a battery 10 of a further embodiment of the present application, and Fig. 22 is a partial enlarged view at G in Fig. 21. As shown in Fig. 21, in embodiments of the present application, the battery 10 comprises: a battery cell group 20a, the battery cell group 20a comprising a plurality of battery cells 20 arranged in a first direction X, and the electrical cavity 11a comprises a third wall 11d intersecting with the second wall 11c, wherein a second gap is provided between an end face of the battery cell group 20a facing the third wall 11d and the third wall 11d, and the first pathway 15 comprises the second gap. At least part of the first pathway 15 is implemented through the second gap, so that the machining difficulty can be reduced without the need to add additional components, and the sealing requirements between the end face and the third wall 11d can also be reduced.

As shown in Fig. 21, the battery 10 further comprises: a first spacing structure 153 provided between the end face 2011 and the third wall 11d, the first spacing structure 153 being used to form at least part of the first pathway 15. At least part of the first pathway 15 is formed by the first spacing structure 153. On the one hand, this can improve the structural stability between the end face 2011 and the third wall 11d, especially when no thermal runaway occurs in the battery cell 20, the relative fixation between the end face 2011 and the third wall 11d can be implemented through this first spacing structure 153, or the sealing between the end face 2011 and the third wall 11d can also be realized; and on the other hand, by reasonably arranging the specific form and position of the first spacing structure 153, the position and direction of the first pathway 15 can be adjusted, and the directional discharge of the emissions passing through the first pathway 15 can thus be realized, thereby improving the safety of the battery 10.

It should be understood that the approach for implementing at least part of the first pathway 15 by means of the first spacing structure 153 and the approach for implementing at least part of the first pathway 15 by means of the second gap may be used independently of each other or in combination with each other, and embodiments of the present application are not limited thereto. For ease of illustration, the present application describes the first spacing structure 153 in detail, primarily in conjunction with the drawings.

It should be understood that the first spacing structure 153 of embodiments of the present application may implement at least part of the first pathway 15 in a variety of ways. For example, as shown in Fig. 22, the first spacing structure 153 is provided with a second flow channel 1531, and the first pathway 15 comprises the second flow channel 1531. The emissions discharged through the pressure relief mechanism 212 can be discharged through the second flow channel 1531, so that by reasonably arranging the position of this second flow channel 1531, directional discharge of the emissions can be realized, which reduces the influence of the emissions on the components inside the electrical cavity 11a, for example, avoiding the influence on the electrode terminals 214 and the busbar components 12, thereby improving the safety of the battery 10.

Specifically, the second flow channel 1531 of embodiments of the present application may be a through hole and/or groove that penetrates through the first spacing structure 153, which facilitates machining and also allows emissions to pass through quickly. For example, as shown in Figs. 21 to 22, an illustration is provided herein with the example that this second flow channel 1531 is a through hole penetrating through the first spacing structure 153, meaning that this first spacing structure 153 may be a porous structure, for example, this first spacing structure 153 may be selected to be a honeycomb-shaped structure.

It should be understood that the dimensions of the second flow channel 1531 of embodiments of the present application may be set according to the actual application. For example, the radial dimension of the second flow channel 1531 is less than or equal to 2 mm, with the radial direction being perpendicular to the direction of flow of the emissions within the second flow channel 1531, so as to prevent the second flow channel 1531 from being over-sized, which also prevents an excessive amount of emissions flowing through the second flow channel 1531, and can also prevent the emissions flowing through the second channel 1531 from having large particle sizes. The second flow channel 1531 has a filtering effect on the emissions and can filter large sized particles, so that in the emissions that ultimately return to the electrical cavity 11a, the high-temperature particles contained are small and at a low temperature, which can then reduce the influence of the emissions from the battery cell 10 that is in thermal runaway on the other battery cells 20, thereby avoiding as much as possible the thermal diffusion within the battery cell 10. Specifically, if the second flow channel 1531 is a through hole, the radial dimension of the second flow channel 1531 may be a maximum value of the pore of the second flow channel 1531; and if the second flow channel 1531 is a groove, the radial dimension of the second flow channel 1531 may be a maximum value of the depth of the groove or the width of the groove, and embodiments of the present application are not limited thereto.

In embodiments of the present application, a filler is provided in the second flow channel 1531, and the filler is configured to seal the second flow channel 1531 when the pressure relief mechanism 212 is not actuated and to be broken when the pressure relief mechanism 212 is actuated so as to make the second flow channel 1531 open. In this way, the sealing performance of the electrical cavity 11a can be improved when no thermal runaway occurs in the battery cell 20, so as to prevent the battery cell 20 from being affected or broken. Here, the material of the filler may be selected according to the actual application, for example, the material of the filler may comprise styrofoam and/or plastic, but embodiments of the present application are not limited thereto.

In embodiments of the present application, this first spacing structure 153 may be provided with a plurality of second flow channels 1531 extending in at least one direction. Specifically, the direction of extension of the second flow channel 1531 of embodiments of the present application may be set according to the actual application. For example, the direction of extension of the second flow channel 1531 may be reasonably arranged according to the positional relationship between the electrode terminals 214 of the battery cell 20 and the pressure relief mechanism 212, so as to avoid the influence of emissions on the electrode terminals 214 and the busbar component 12 connected to the electrode terminals 214. For example, as shown in Figs. 21 to 22, taking the example that the pressure relief mechanism 212 and the electrode terminals 214 are disposed on two oppositely arranged walls, the first spacing structure 153 may be provided with a plurality of second flow channels 1531 extending along a third direction Z, the third direction Z being perpendicular to the second wall 11c, so as to cause emissions to pass through the second flow channels 1531, which achieves directional discharge, and can also avoid influence on the electrode terminals 214, and the busbar component 12 connected to the electrode terminals 214.

Optionally, the material of the first spacing structure 153 of embodiments of the present application may be set according to the actual application. For example, considering that the first spacing structure 153 has the function of filtering, absorbing heat and cooling, and partially intercepting emissions, in order to avoid the failure of the first spacing structure 153 and to avoid extensive breakage of the first spacing structure 153 by the emissions, the material of the first spacing structure 153 may comprise at least one of the following: a metal, a ceramic, a silicone rubber, and a plastic.

It should be understood that embodiments of the present application may also implement at least part of the first pathway 15 in other ways. Fig. 23 is a schematic diagram of the internal structure of a battery 10 of another embodiment of the present application. As shown in Fig. 23, the battery 10 further comprises: a second spacing structure 154 provided between two adjacent battery cells of the battery cells 20, the second spacing structure 154 being used to form at least part of the first pathway 15. The second spacing structure 154 provided between two adjacent battery cells 20 in the battery 10 can be used to absorb expansion and deformation of the battery cells 20 under normal use of the battery cells 20; and when the isolation component 116 below the battery cells 20 is a thermal management component, it can also be used to block water vapor generated by the thermal management component; and in the event of thermal runaway in the battery cell 20, on the one hand, it can block the heat transferred between the battery cells 20, and on the other hand, this second spacing structure 154 can be used to form at least part of the first pathway 15, then the second spacing structure 154 can allow a small amount of emissions to be discharged to the electrical cavity 11a, which increases the discharging path for the emissions, and also improves the efficiency of discharge of the emissions.

It should be understood that the second spacing structure 154 of embodiments of the present application may form at least part of the first pathway 15 in a variety of ways. The second spacing structure 154 is configured to be broken when the pressure relief mechanism 212 is actuated so as to form a third gap between the two adjacent battery cells of the battery cells 20, and the first pathway 15 comprises the third gap. In this way, by reasonably selecting the material of the second spacing structure 154, the second spacing structure 154 can be broken when the pressure relief mechanism 212 is actuated, thereby forming a third gap without additional machining of the second spacing structure 154, which is simpler and can also ensure the sealing and stability of the battery cell 20 during normal use.

Specifically, the second spacing structure 154 being broken in embodiments of the present application may include: at least part of that second spacing structure 154 being broken. For example, when the pressure relief mechanism 212 is actuated, the second spacing structure 154 may only be externally broken, so that some internal components of the second spacing structure 154 that are exposed will not be broken; or the internal structure of the second spacing structure 154 is broken, for example, the second spacing structure 154 may be a multi-layer structure and some of the structural layers in the multi-layer structure are broken; or the second spacing structure 154 may be broken in its entirety, and embodiments of the present application are not limited thereto.

It should be understood that the second spacing structure 154 of embodiments of the present application can be broken when the pressure relief mechanism 212 is actuated, which can be implemented in a variety of ways. For example, the second spacing structure 154 may comprise a region of low structural strength so that the second spacing structure 154 is broken by the impact force of emissions on the second spacing structure 154 when the pressure relief mechanism 212 is actuated.

As a further example, the second spacing structure 154 is a multi-layer structure that comprises a melting layer, the melting layer being used to be melted when the pressure relief mechanism 212 is actuated so as to form a third gap between the two battery cells 20. Since the emissions discharged through the pressure relief mechanism 212 are high-temperature emissions, by setting the melting layer to be less likely to be broken during normal use of the battery cell 20, the safety and stability of the battery 10 can be ensured.

It should be understood that the melting layer may be disposed on any layer of the second spacing structure 154, for example, the melting layer may be the outermost layer of the second spacing structure 154 so that the melting layer may come into direct contact with the battery cell 20 and be melted in time.

Optionally, in some embodiments, this second spacing structure 154 may also comprise a first region and a second region, the melting point of the first region being higher than that of the second region, and the second region being used to be melted when the pressure relief mechanism 212 is actuated, so as to form a third gap between the two battery cells 20. In this way, the second spacing structure 154 comprises the first region that is resistant to high temperatures and the second region that is not resistant to high temperatures, so that when the pressure relief mechanism 212 is actuated, the emissions can melt the second region to form the first pathway 15; at the same time, the first region of the second spacing structure 154 can be left substantially unbroken to ensure that the heat transfer between the battery cells 20 can be blocked to avoid thermal diffusion.

It should be understood that the positional distribution of the first region and the second region of embodiments of the present application may be set according to the actual application. For example, this first region may be a central region to facilitate thermal insulation, while the second region is typically a marginal region so that the thermal insulation effect is less affected when this second region is broken, or, alternatively, this second region may also comprise part of the middle region so as to increase the area of distribution of this second region, and thus to increase the discharge rate of the emissions.

In some embodiments, the area of the first region is greater than that of the second region to ensure that the proportion of the area of the first region used to block heat is greater than 50% so as to avoid thermal diffusion.

In some embodiments, the materials of the first region and the second region may be set according to the actual application. For example, the material of the second region comprises rubber and/or plastic to avoid breakage of the second region by the high-temperature emissions.

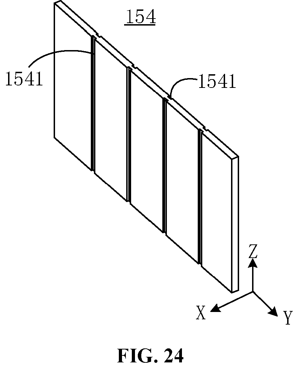

Fig. 24 illustrates one possible implementation of the second spacing structure 154 of embodiments of the present application. As shown in Fig. 24, the second spacing structure 154 is provided with a third flow channel 1541, and the first pathway 15 comprises the third flow channel 1541. The emissions discharged through the pressure relief mechanism 212 can be discharged to the electrical cavity 11a through the third flow channel 1541, so that by reasonably arranging the position of this third flow channel 1541, directional discharge of the emissions can be realized, which reduces the influence of the emissions on components inside the electrical cavity 11a, and can avoid thermal diffusion between the battery cells 20, thereby improving the safety of the battery 10.

In embodiments of the present application, this second spacing structure 154 may be provided with a plurality of third flow channels 1541 extending in at least one direction. Specifically, the direction of extension of the third flow channel 1541 of embodiments of the present application may be set according to the actual application. For example, as in Fig. 24, this second spacing structure 154 may be provided with a plurality of third flow channels 1541 extending along the third direction Z, the third direction Z being perpendicular to the arrangement direction of two battery cells 20 sandwiching this second spacing structure 154, and the third direction Z being also perpendicular to the second wall 11c of the electrical cavity 11a, so as to cause emissions to pass through the third flow channels 1541, which realizes directional discharge, and can also avoid the influence of high-temperature emissions on the two adjacent battery cells 20.

In embodiments of the present application, the plurality of third flow channels 1541 may include: a through hole penetrating through the second spacing structure 154; and/or a groove disposed in a surface of the second spacing structure 154 that faces at least one battery cell 20 in the two battery cells 20 to facilitate machining. For example, the plurality of third flow channels 1541 may comprise a plurality of through holes distributed parallel to each other, each through hole penetrating through the second spacing structure 154 along the third direction Z. As a further example, the plurality of third flow channels 1541 may comprise a plurality of grooves, and the plurality of grooves may comprise: grooves with openings facing at least one battery cell 20 in two battery cells 20 sandwiching the second spacing structure 154. For example, Fig. 24 takes the plurality of third flow channels 1541 comprising grooves with openings facing two opposite sides as an example, and the plurality of third flow channels 1541 in Fig. 24 are parallel to each other and uniformly distributed, which not only facilitates machining but also makes emissions passing through the third flow channels 1541 relatively dispersed, thus avoiding the problem of excessive emissions in local regions caused by the concentration of emissions, so as to ensure the safety of the battery cells 20 and the battery 10.

In embodiments of the present application, a filler may be provided in the third flow channel 1541, and the filler is configured to seal the third flow channel 1541 when the pressure relief mechanism 212 is not actuated and to be broken when the pressure relief mechanism 212 is actuated so as to make the third flow channel 1541 open, and thus this can be used to block heat transfer between the battery cells 20 when no thermal runaway occurs in the battery cells 20. Here, the material of the filler may be selected according to the actual application, for example, the material of the filler may comprise styrofoam and/or plastic, but embodiments of the present application are not limited thereto.

Embodiments of the present application further disclose an electrical device comprising a battery 10 of any of the possible implementations disclosed in embodiments of the present application. Optionally, the electrical device may be the vehicle 1 shown in Fig. 1 or may be other electrical devices using batteries, such as mobile phones, portable devices, laptops, ships, spacecraft, electric toys, electric tools, and the like.

**Claims**

1. A battery, comprising:

   a box (11) comprising an electrical cavity (11a);
   a battery cell (20) accommodated in the electrical cavity (11a), a first wall (21a) of the battery cell (20) being provided with a pressure relief mechanism (212);
   a first pathway (15) and a second pathway (16), the first pathway (15) and the second pathway (16) being configured to be capable of communicating with the interior of the battery cell (20) via the pressure relief mechanism (212) when the pressure relief mechanism (212) is actuated, wherein the first pathway (15) is used to discharge emissions discharged from the pressure relief mechanism (212) into the electrical cavity (11a), and the second pathway (16) is used to discharge the emissions discharged from the pressure relief mechanism (212) out of the electrical cavity (11a);
   **characterized in that**
   a first balance valve (17) for discharging emissions passing through the first pathway (15) out of the box (11); and
   a second balance valve (18) for discharging emissions passing through the second pathway (16) out of the box (11).

2. The battery according to claim 1, wherein the electrical cavity (11a) comprises a second wall (11c), the first wall (21a) facing the second wall (11c).

3. The battery according to claim 2, wherein the first balance valve (17) is disposed on a wall of the electrical cavity (11a) other than the second wall (11c), and/or
   the second wall (11c) is provided with a pressure relief region (114) corresponding to the pressure relief mechanism (212), and the pressure relief region (114) is used to form at least part of the second pathway (16).

4. The battery according to any one of claims 1 to 3, wherein the box (11) comprises:
   a collection cavity (11b) for collecting emissions discharged through the second pathway (16) when the pressure relief mechanism (212) is actuated, the second balance valve (18) being provided on a wall of the collection cavity (11b).

5. The battery according to claim 4, wherein the second wall (11c) is used to form at least part of the collection cavity (11b).

6. The battery according to claim 5, wherein the second wall (11c) is provided with a groove (115) with an opening facing the pressure relief mechanism (212), the groove (115) being used to form at least part of the collection cavity (11b), and the pressure relief region (114) being the opening of the groove (115).

7. The battery according to claim 6, wherein a surface of the groove (115) that is far from the battery cell (20) protrudes from a surface, which is far from the battery cell (20), of a region of the second wall (11c) other than the groove (115); and/or
   wherein the second balance valve (18) is disposed in a bottom wall and/or a side wall of the groove (115).

8. The battery according to claim 4, wherein the second wall (11c) is used to isolate the electrical cavity (11a) from the collection cavity (11b).

9. The battery according to claim 8, wherein the box (11) further comprises:

   a protective member (117), the protective member (117) being used to form the collection cavity (11b) with the second wall (11c);
   preferably,
   wherein the second balance valve (18) is disposed in the protective member (117).

10. The battery according to any one of claims 8 to 9, wherein the pressure relief region (114) comprises a weak region provided in the second wall (11c), the weak region being configured to be breakable when the pressure relief mechanism (212) is actuated, so as to cause the emissions to pass through the weak region into the collection cavity (11b);
    or
    wherein the pressure relief region (114) comprises a through hole penetrating through the second wall (11c), the through hole being used to enable the emissions to pass through the through hole into the collection cavity (11b) when the pressure relief mechanism (212) is actuated.

11. The battery according to any one of claims 2 to 10, wherein a first gap (151) is provided between a surface of the second wall (11c) facing the battery cell (20) and the first wall (21a), and the first pathway (15) comprises the first gap (151);
preferably,
wherein the battery further comprises:

a connection structure (152), the connection structure (152) being provided between the first wall (21a) and the second wall (11c), and the connection structure (152) being used to form part of the first pathway (15);
more preferably,
wherein the connection structure (152) is provided with a first flow channel (1521), and the first pathway (15) comprises the first flow channel (1521).

12. The battery according to any one of claims 2 to 11, wherein the battery further comprises:

a battery cell group (20a), the battery cell group (20a) comprising a plurality of said battery cells (20) arranged in a first direction; and
the electrical cavity (11a) comprises a third wall (11d) intersecting with the second wall (11c), wherein a second gap is provided between an end face of the battery cell group (20a) facing the third wall (11d) and the third wall (11d), and the first pathway (15) comprises the second gap;
preferably,
wherein the battery further comprises:

a first spacing structure (153) provided between the end face and the third wall (11d), the first spacing structure (153) being used to form at least part of the first pathway (15);
more preferably,
wherein the first spacing structure (153) is provided with a second flow channel (1531), and the first pathway comprises the second flow channel (1531).

13. The battery according to claim 12, wherein the battery further comprises:

a second spacing structure (154) provided between two adjacent battery cells of the battery cells (20), the second spacing structure (154) being used to form at least part of the first pathway (15).

14. The battery according to claim 13, wherein the second spacing structure (154) is configured to be broken when the pressure relief mechanism (212) is actuated so as to form a third gap between the two adjacent battery cells of the battery cells (20), and the first pathway (15) comprises the third gap;
and/or
wherein the second spacing structure (154) is provided with a third flow channel (1541), and the first pathway (15) comprises the third flow channel (1541).

15. An electrical device, comprising:
a battery according to any one of claims 1 to 14, the battery being used to provide electrical energy for the electrical device.

**Patentansprüche**

1. Batterie, umfassend:

einen Kasten (11), der einen elektrischen Hohlraum (11a) umfasst;
eine Batteriezelle (20), die in dem elektrischen Hohlraum (11a) untergebracht ist, wobei eine erste Wand (21a) der Batteriezelle (20) mit einem Druckentlastungsmechanismus (212) versehen ist;
einen ersten Pfad (15) und einen zweiten Pfad (16), wobei der erste Pfad (15) und der zweite Pfad (16) dazu ausgelegt sind, bei Betätigung des Druckentlastungsmechanismus (212) mit dem Inneren der Batteriezelle (20) über den Druckentlastungsmechanismus (212) kommunizieren zu können, wobei der erste Pfad (15) zur Ableitung von durch den Druckentlastungsmechanismus (212) abgegebenen Emissionen in den elektrischen Hohlraum (11a) verwendet wird und der zweite Pfad (16) zur Ableitung der durch den Druckentlastungsmechanismus (212) abgegebenen Emissionen aus dem elektrischen Hohlraum (11a) verwendet wird;
**dadurch gekennzeichnet, dass**
ein erstes Ausgleichsventil (17) zum Ableiten von Emissionen, die durch den ersten Pfad (15) aus dem Kasten (11) gelangen; und
ein zweites Ausgleichsventil (18) zum Ableiten von Emissionen, die durch den zweiten Pfad (16) aus dem Kasten (11) gelangen.

2. Batterie nach Anspruch 1, wobei der elektrische Hohlraum (11a) eine zweite Wand (11c) umfasst, wobei die erste Wand (21a) der zweiten Wand (11c) zugewandt ist.

3. Batterie nach Anspruch 2, wobei das erste Ausgleichsventil (17) an einer anderen Wand des elektrischen Hohlraums (11a) als der zweiten Wand (11c) angeordnet ist und/oder
die zweite Wand (11c) mit einem Druckentlastungsbereich (114) versehen ist, der dem Druckentlastungsmechanismus (212) entspricht, und der Druckentlastungsbereich (114) dazu verwendet wird, mindestens einen Teil des zweiten Pfads (16) zu bilden.

4. Batterie nach einem der Ansprüche 1 bis 3, wobei der Kasten (11) umfasst:
einen Sammelhohlraum (11b) zum Sammeln von Emissionen, die durch den zweiten Pfad (16) bei Betätigung des Druckentlastungsmechanismus (212) abgeleitet werden, wobei das zweite Ausgleichsventil (18) an einer Wand des Sammelhohlraums (11b) vorgesehen ist.

5. Batterie nach Anspruch 4, wobei die zweite Wand (11c) dazu verwendet wird, mindestens einen Teil des Sammelhohlraums (11b) zu bilden.

6. Batterie nach Anspruch 5, wobei die zweite Wand (11c) mit einer Nut (115) mit einer Öffnung versehen ist, die dem Druckentlastungsmechanismus (212) zugewandt ist, wobei die Nut (115) dazu verwendet wird, mindestens einen Teil des Sammelhohlraums (11b) zu bilden, und wobei der Druckentlastungsbereich (114) die Öffnung der Nut (115) ist.

7. Batterie nach Anspruch 6, wobei eine der Batteriezelle (20) abgewandte Oberfläche der Nut (115) von einer der Batteriezelle (20) abgewandten Oberfläche eines Bereichs der zweiten Wand (11c), der nicht die Nut (115) ist, vorsteht;
und/oder
wobei das zweite Ausgleichsventil (18) in einer Bodenwand und/oder einer Seitenwand der Nut (115) angeordnet ist.

8. Batterie nach Anspruch 4, wobei die zweite Wand (11c) verwendet wird, um den elektrischen Hohlraum (11a) von dem Sammelhohlraum (11b) zu isolieren.

9. Verfahren nach Anspruch 8, wobei der Kasten (11) ferner umfasst:

ein Schutzelement (117), wobei das Schutzelement (117) dazu verwendet wird, den Sammelhohlraum (11b) mit der zweiten Wand (11c) zu bilden;
vorzugsweise,
wobei das zweite Ausgleichsventil (18) in dem Schutzelement (117) angeordnet ist.

10. Batterie nach einem der Ansprüche 8 bis 9, wobei der Druckentlastungsbereich (114) einen Schwachbereich umfasst, der in der zweiten Wand (11c) bereitgestellt ist, wobei der Schwachbereich dazu ausgelegt ist, zerbrechlich zu sein, wenn der Druckentlastungsmechanismus (212) betätigt wird, um zu bewirken, dass die Emissionen durch den Schwachbereich in den Sammelhohlraum (11b) gelangen;
oder
wobei der Druckentlastungsbereich (114) ein Durchgangsloch umfasst, das die zweite Wand (11c) durchdringt, wobei das Durchgangsloch verwendet wird, um zu ermöglichen, dass die Emissionen durch das Durchgangsloch in den Sammelhohlraum (11b) gelangen, wenn der Druckentlastungsmechanismus (212) betätigt wird.

11. Batterie nach einem der Ansprüche 2 bis 10, wobei ein erster Spalt (151) zwischen einer Oberfläche der zweiten Wand (11c), die der Batteriezelle (20) zugewandt ist, und der ersten Wand (21a) vorgesehen ist und der erste Pfad (15) den ersten Spalt (151) umfasst;

vorzugsweise,
wobei die Batterie ferner umfasst:

eine Verbindungsstruktur (152), wobei die Verbindungsstruktur (152) zwischen der ersten Wand (21a) und der zweiten Wand (11c) vorgesehen ist und die Verbindungsstruktur (152) dazu verwendet wird, einen Teil des ersten Pfads (15) zu bilden;
noch bevorzugter,
wobei die Verbindungsstruktur (152) mit einem ersten Strömungskanal (1521) versehen ist und der erste Pfad (15) den ersten Strömungskanal (1521) umfasst.

12. Batterie nach einem der Ansprüche 2 bis 11, wobei die Batterie ferner umfasst:

eine Batteriezellengruppe (20a), wobei die Batteriezellengruppe (20a) eine Vielzahl der Batteriezellen (20) umfasst, die in einer ersten Richtung angeordnet sind; und
der elektrische Hohlraum (11a) eine dritte Wand (11d) umfasst, die sich mit der zweiten Wand (11c) schneidet, wobei ein zweiter Spalt zwischen einer Stirnfläche der Batteriezellengruppe (20a), die der dritten Wand (11d) zugewandt ist, und der dritten Wand (11d) vorgesehen ist und der erste Pfad (15) den zweiten Spalt umfasst;
vorzugsweise,
wobei die Batterie ferner umfasst:

eine erste Abstandsstruktur (153), die zwischen der Stirnfläche und der dritten Wand (11d) vorgesehen ist, wobei die erste Abstandsstruktur (153) dazu verwendet wird, mindestens einen Teil des ersten Pfads (15) zu bilden;
noch bevorzugter,
wobei die erste Abstandsstruktur (153) mit einem zweiten Strömungskanal (1531) versehen ist und der erste Pfad den zweiten Strömungskanal (1531) umfasst.

13. Batterie nach Anspruch 12, wobei die Batterie ferner umfasst:
eine zweite Abstandsstruktur (154), die zwischen zwei benachbarten Batteriezellen der Batteriezellen (20) vorgesehen ist, wobei die zweite Abstandsstruktur (154) dazu verwendet wird, mindestens einen Teil des ersten Pfads (15) zu bilden.

14. Batterie nach Anspruch 13, wobei die zweite Abstandsstruktur (154) dazu ausgelegt ist, gebrochen zu werden, wenn der Druckentlastungsmechanismus (212) betätigt wird, um einen dritten Spalt zwischen den zwei benachbarten Batteriezellen der Batteriezellen (20) zu bilden, und der erste Pfad (15) den dritten Spalt umfasst; und/oder
wobei die zweite Abstandsstruktur (154) mit einem dritten Strömungskanal (1541) versehen ist und der erste Pfad (15) den dritten Strömungskanal (1541) umfasst.

15. Elektronische Vorrichtung, umfassend:
eine Batterie nach einem der Ansprüche 1 bis 14, wobei die Batterie dazu verwendet wird, elektrische Energie für die elektrische Vorrichtung bereitzustellen.

**Revendications**

1. Batterie, comprenant :

un boîtier (11) comprenant une cavité électrique (11a) ;
une cellule de batterie (20) logée dans la cavité électrique (11a), une première paroi (21a) de la cellule de batterie (20) étant pourvue d'un mécanisme de décompression (212) ;
un premier chemin (15) et un second chemin (16), le premier chemin (15) et le second chemin (16) étant configurés pour être capables de communiquer avec l'intérieur de la cellule de batterie (20) par l'intermédiaire du mécanisme de décompression (212) lorsque le mécanisme de décompression (212) est actionné, dans laquelle le premier chemin (15) est utilisé pour décharger des émissions déchargées du mécanisme de décompression (212) dans la cavité électrique (11a), et le second chemin (16) est utilisé pour décharger les émissions déchargées du mécanisme de décompression (212) hors de la cavité électrique (11a) ;
**caractérisée en ce que**

une première vanne d'équilibrage (17) pour décharger des émissions traversant le premier chemin (15) hors du boîtier (11) ; et

une seconde vanne d'équilibrage (18) pour décharger des émissions traversant le second chemin (16) hors du boîtier (11).

2. Batterie selon la revendication 1, dans laquelle la cavité électrique (11a) comprend une seconde paroi (11c), la première paroi (21a) faisant face à la seconde paroi (11c).

3. Batterie selon la revendication 2, dans laquelle la première vanne d'équilibrage (17) est disposée sur une paroi de la cavité électrique (11a) autre que la seconde paroi (11c), et/ou

la seconde paroi (11c) est pourvue d'une région de décompression (114) correspondant au mécanisme de décompression (212), et la région de décompression (114) est utilisée pour former au moins une partie du second chemin (16).

4. Batterie selon l'une quelconque des revendications 1 à 3, dans laquelle le boîtier (11) comprend :
une cavité de collecte (11b) destinée à collecter des émissions déchargées à travers le second chemin (16) lorsque le mécanisme de décompression (212) est actionné, la seconde vanne d'équilibrage (18) étant fournie sur une paroi de la cavité de collecte (11b).

5. Batterie selon la revendication 4, dans laquelle la seconde paroi (11c) est utilisée pour former au moins une partie de la cavité de collecte (11b).

6. Batterie selon la revendication 5, dans laquelle la seconde paroi (11c) est pourvue d'une rainure (115) avec une ouverture faisant face au mécanisme de décompression (212), la rainure (115) étant utilisée pour former au moins une partie de la cavité de collecte (11b), et la région de décompression (114) étant l'ouverture de la rainure (115).

7. Batterie selon la revendication 6, dans laquelle une surface de la rainure (115) qui est éloignée de la cellule de batterie (20) fait saillie à partir d'une surface, qui est éloignée de la cellule de batterie (20), d'une région de la seconde paroi (11c) autre que la rainure (115) ;

et/ou

dans laquelle la seconde vanne d'équilibrage (18) est disposée dans une paroi de fond et/ou une paroi latérale de la rainure (115).

8. Batterie selon la revendication 4, dans laquelle la seconde paroi (11c) est utilisée pour isoler la cavité électrique (11a) de la cavité de collecte (11b).

9. Procédé selon la revendication 8, dans laquelle le boîtier (11) comprend en outre :

un élément de protection (117), l'élément de protection (117) étant utilisé pour former la cavité de collecte (11b) avec la seconde paroi (11c) ;
de préférence,
dans laquelle la seconde vanne d'équilibre (18) est disposée dans l'élément de protection (117).

10. Batterie selon l'une quelconque des revendications 8 à 9, dans laquelle la région de décompression (114) comprend une région faible fournie dans la seconde paroi (11c), la région faible étant configurée pour pouvoir être rompue lorsque le mécanisme de décompression (212) est actionné, de manière à amener les émissions à traverser la région faible vers la cavité de collecte (11b) ;
ou
dans laquelle la région de décompression (114) comprend un trou traversant pénétrant à travers la seconde paroi (11c), le trou traversant étant utilisé pour permettre aux émissions de traverser le trou traversant vers la cavité de collecte (11b) lorsque le mécanisme de décompression (212) est actionné.

11. Batterie selon l'une quelconque des revendications 2 à 10, dans laquelle un premier espace (151) est fourni entre une surface de la seconde paroi (11c) faisant face à la cellule de batterie (20) et la première paroi (21a), et le premier chemin (15) comprend le premier espace (151) ;
de préférence,
dans laquelle la batterie comprend en outre :

une structure de liaison (152), la structure de liaison (152) étant fournie entre la première paroi (21a) et la seconde paroi (11c), et la structure de liaison (152) étant utilisée pour former une partie du premier chemin (15) ;
plus préférablement,
dans laquelle la structure de liaison (152) est pourvue d'un premier canal d'écoulement (1521), et le premier chemin (15) comprend le premier canal d'écoulement (1521).

12. Batterie selon l'une quelconque des revendications 2 à 11, dans laquelle la batterie comprend en outre :

un groupe de cellules de batterie (20a), le groupe de cellules de batterie (20a) comprenant une pluralité desdites cellules de batterie (20) agencées dans une première direction ; et
la cavité électrique (11a) comprend une troisième paroi (11d) croisant la seconde paroi (11c), dans laquelle un second espace est fourni entre une face d'extrémité du groupe de cellules de batterie (20a) faisant face à la troisième paroi (11d) et la troisième paroi (11d), et le premier chemin (15) comprend le second espace ;
de préférence,
dans laquelle la batterie comprend en outre :

une première structure d'espacement (153) fournie entre la face d'extrémité et la troisième paroi (11d), la première structure d'espacement (153) étant utilisée pour former au moins une partie du premier chemin (15) ;
plus préférablement,
dans laquelle la première structure d'espacement (153) est pourvue d'un second canal d'écoulement (1531), et le premier chemin comprend le second canal d'écoulement (1531).

13. Batterie selon la revendication 12, dans laquelle la batterie comprend en outre :
une seconde structure d'espacement (154) fournie entre deux cellules de batterie adjacentes des cellules de batterie (20), la seconde structure d'espacement (154) étant utilisée pour former au moins une partie du premier chemin (15).

14. Batterie selon la revendication 13, dans laquelle la seconde structure d'espacement (154) est configurée pour être rompue lorsque le mécanisme de décompression (212) est actionné de manière à former un troisième espace entre les deux cellules de batterie adjacentes des cellules de batterie (20), et le premier chemin (15) comprend le troisième espace ;
et/ou
dans laquelle la seconde structure d'espacement (154) est pourvue d'un troisième canal d'écoulement (1541), et le premier chemin (15) comprend le troisième canal d'écoulement (1541).

15. Dispositif électrique, comprenant :
une batterie selon l'une quelconque des revendications 1 à 14, la batterie étant utilisée pour fournir de l'énergie électrique au dispositif électrique.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

FIG. 18

FIG. 19

**FIG. 20**

**FIG. 21**

**FIG. 22**

**FIG. 23**

**FIG. 24**

**EP 4 404 357 B1**

**Patent documents cited in the description**

- CN 2022100760 W
- CN 111106278
- CN 111106277
- CN 112103444